(19)

**Europäisches Patentamt**
**European Patent Office**
**Office européen des brevets**

(11) **EP 4 563 758 A1**

(12) **EUROPÄISCHE PATENTANMELDUNG**

(43) Veröffentlichungstag:
    **04.06.2025   Patentblatt 2025/23**

(51) Internationale Patentklassifikation (IPC):
    *E03B 7/04* (2006.01)      *E03B 7/07* (2006.01)
    *G06Q 50/06* (2024.01)     *G06N 3/00* (2023.01)
    *G01K 3/00* (2006.01)      *G01N 33/18* (2006.01)

(21) Anmeldenummer: 24206698.3

(22) Anmeldetag: **15.10.2024**

(52) Gemeinsame Patentklassifikation (CPC):
    **G01K 13/02; G01K 7/427; G01K 13/026;**
    **G06Q 10/20; G06Q 50/06;** E03B 7/07; G06N 20/00

(84) Benannte Vertragsstaaten:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Benannte Erstreckungsstaaten:
    **BA**
    Benannte Validierungsstaaten:
    **GE KH MA MD TN**

(30) Priorität:  **29.11.2023   CH 13312023**

(71) Anmelder: **R. Nussbaum AG**
    **4600 Olten (CH)**

(72) Erfinder:
    • **Zeiter, Patrik**
      **4853 Riken (CH)**
    • **Gerber, Dominic**
      **5036 Oberentfelden (CH)**

    • **Bobst, Urs**
      **4703 Kestenholz (CH)**
    • **Schneider, Livio**
      **4853 Riken (CH)**
    • **Liebi, Christoph**
      **4565 Recherswil (CH)**
    • **Nicoara, Angela**
      **4800 Zofingen (CH)**
    • **Bättig, Martin**
      **8050 Zürich (CH)**
    • **Wegmann, Silvan**
      **8810 Horgen (CH)**

(74) Vertreter: **Keller Schneider**
    **Patent- und Markenanwälte AG**
    **Eigerstrasse 2**
    **Postfach**
    **3000 Bern 14 (CH)**

(54)   **SYSTEM ZUR TRINKWASSERVERSORGUNG EINES GEBÄUDES**

(57)   Ein System zur Trinkwasserversorgung eines Gebäudes (1) umfasst ein Leitungssystem (2) zur Versorgung des Gebäudes (1) mit Trinkwasser, mehrere verteilt angeordnete Temperatursensoren (51.1 ... 6) zum Erzeugen von Messdaten, die einer Wassertemperatur an einem Messort entlang einer Leitung des Leitungssystems (2) entsprechen, ein lokales Netzwerk (72, 62.1...4, 65), mit dem die Temperatursensoren (51.1...6) zur Übermittlung von Daten verbunden sind, und eine Cloudplattform (80), die über ein übergeordnetes Kommunikationsnetz (77) mit dem lokalen Netzwerk (72, 62.1...4, 65) verbunden ist. Dabei sind zeitlich aufgelöste Messdaten der Temperatursensoren (51.1...6) über das lokale Netzwerk (72, 62.1... 4, 65) und das übergeordnete Kommunikationsnetz (77) zur Cloudplattform (80) übermittelbar.

Fig. 1

## Beschreibung

### Technisches Gebiet

Die Erfindung betrifft ein System zur Trinkwasserversorgung eines Gebäudes, ein Verfahren zur Gewährleistung der Trinkwasserhygiene in einem solchen System sowie ein Computerprogrammprodukt.

### Stand der Technik

Systeme zur Versorgung von Gebäuden mit Kalt- und Warmwasser müssen verschiedensten Anforderungen genügen. Eine Kernanforderung ist die Gewährleistung der Trinkwasserhygiene. Diese ist unter anderem durch zu hohe Temperaturen in der Kaltwasserversorgung und durch zu tiefe Temperaturen in der Warmwasserversorgung gefährdet. Werden Sollbereiche für die Kalt- und Warmwassertemperatur nicht eingehalten, können sich zudem Komforteinbussen für die Benutzer ergeben.

Immer wichtiger wird auch die Energieeffizienz der Trinkwasser-Versorgungssysteme. Diese lässt sich steigern, indem Komponenten der Trinkwasserversorgung in intelligenter Weise mit weiteren haustechnischen Anlagen, z. B. Heizung/Lüftung/Klima, Beschattung und Anlagen zur lokalen Stromproduktion, zusammenwirken.

Die Erfüllung der erwähnten Anforderungen erfordert eine genaue Kenntnis des Zustands des Trinkwasser-Versorgungssystems und der funktionalen Zusammenhänge in diesem System. Zudem müssen Messdaten und davon abgeleitete Informationen, z. B. Ergebniswerte und Steuerdaten, erzeugt und zwischen Komponenten des Versorgungssystems und Drittsystemen ausgetauscht werden können

### Darstellung der Erfindung

Aufgabe der Erfindung ist es deshalb, ein dem eingangs genannten technischen Gebiet zugehörendes System zur Trinkwasserversorgung zu schaffen, welches engmaschig überwacht werden kann und Daten zur Verfügung stellt, um verschiedene Zustände und Vorgänge des Systems zu identifizieren.

Die Lösung der Aufgabe ist durch die Merkmale des Anspruchs 1 definiert. Gemäss der Erfindung umfasst das System

a) ein Leitungssystem zur Versorgung des Gebäudes mit Trinkwasser;

b) mehrere verteilt angeordnete Temperatursensoren zum Erzeugen von Messdaten, die einer Wassertemperatur an einem Messort entlang einer Leitung des Leitungssystems entsprechen,

c) ein lokales Netzwerk, mit dem die Temperatursensoren zur Übermittlung von Daten verbunden sind;

d) eine Cloudplattform, die über ein übergeordnetes Kommunikationsnetz mit dem lokalen Netzwerk verbunden ist;

Dabei sind zeitlich aufgelöste Messdaten der Temperatursensoren über das lokale Netzwerk und das übergeordnete Kommunikationsnetz zur Cloudplattform übermittelbar.

Das Gebäude kann durch das Leitungssystem mit Kaltwasser, mit Warmwasser bzw. bevorzugt mit Kalt- und Warmwasser versorgt werden. Die Aufbereitung des Warmwassers kann zentral erfolgen, wobei stromabwärts der Warmwasseraufbereitung (zentraler Boiler) separate Leitungsnetze für Kalt- bzw. Warmwasser vorhanden sind. Die Aufbereitung des Warmwassers kann auch dezentral erfolgen, mit mehreren dezentralen Warmwasseraufbereitungsvorrichtungen (Etagenboiler). Vor diesen dezentralen Vorrichtungen besteht lediglich ein Kaltwasserversorgungsnetz und nur nach diesen dezentralen Vorrichtungen sind getrennte Leitungen für Kalt- bzw. Warmwasser vorhanden. Die dezentralen Warmwasseraufbereitungsvorrichtungen können einzelne funktionale Gebäudeeinheiten (z. B. einzelne Wohnungen) versorgen oder z. B. ganze Etagen.

Die Temperatursensoren können grundsätzlich an beliebigen Leitungen des Leitungssystems angeordnet sein, sowohl in Versorgungsleitungen als auch in Rückleitungen einer Zirkulation. Auch am Hauptwasseranschluss und unmittelbar an den Entnahmestellen (Armaturen) sind solche Temperatursensoren grundsätzlich möglich. Sie bestimmen jeweils die lokale Temperatur des Warm- oder Kaltwassers in der entsprechenden Leitung.

Das lokale Netzwerk kann homogen aufgebaut sein, d. h. die Temperatursensoren übermitteln ihre Daten alle über gleichartige Übertragungskanäle. Es kann aber auch inhomogen aufgebaut sein, d. h. die Temperatursensoren übermitteln ihre Daten über verschiedenartige Übertragungskanäle. Die zu übertragenden Daten können durch analoge oder digitale Signale repräsentiert sein. Die Wandlung der in der Regel zunächst analog erhobenen Messdaten in digitale Signale erfolgt bevorzugt in einem Modul, das den Temperatursensor enthält, so dass die weiteren Signale digital übermittelt werden können. Die A/D-Wandlung kann aber auch auf einer höheren Ebene stattfinden, wobei ein Wandler insbesondere die Signale mehrerer Temperatursensoren verarbeiten kann. Im Rahmen der Wandlung wird bevorzugt das generierte digitale Signal mit einer (vorzugweise eindeutigen) Kennung für den Temperatursensor und gegebenenfalls mit einem Zeitstempel ergänzt. Die Ergänzung mit diesen Informationen kann aber auch unabhängig von der Wandlung, auf einer höheren Ebene, erfolgen.

Die Übertragungskanäle im lokalen Netzwerk können drahtgebunden sein, z. B. Ethernet oder analoge Übertragungsleitungen. Die Übertragungskanäle können drahtlos sein, z. B. WLAN (IEEE-802.11), Low Power WiFi, LoRa, Thread, Bluetooth, Bluetooth Low Energy (BLE) oder andere. Grundsätzlich ist auch eine Datenübertragung über die Leitungen des Leitungssystems und/oder das darin geführte Medium möglich. Das lokale Netzwerk kann über mehrere Ebenen verfügen, z. B. eine tiefe Ebene, an die die Temperatursensoren angebunden sind, und eine hohe Ebene, die einerseits mit der tiefen Ebene und andererseits mit einer Schnittstelle zur Cloudplattform bzw. einem Weitverkehrsnetz (WAN) kommuniziert. Die Ebenen können durch unterschiedliche drahtlose und/oder drahtgebundene Kanäle gebildet sein.

Die Cloudplattform wird auf einem zentralen Server oder auf mehreren dezentralen Servern bereitgestellt. Diese sind insbesondere über das Internet erreichbar und empfangen Messdaten von einer Reihe von Gebäuden. Die Cloudplattform verfügt über Mittel zur Verarbeitung, Aggregation, Speicherung und Bereitstellung von Ursprungsdaten und verarbeiteten Daten. Insbesondere gewährt die Cloudplattform autorisierten Benutzern Zugriff und ermöglicht eine Überwachung und Steuerung haustechnischer Anlagen, wobei nebst den Daten aus dem erfindungsgemässen System auch Drittdaten visualisiert sowie mit internen Daten verknüpft und aggregiert werden können.

Aufgrund der Anbindung mehrerer Gebäude können auf der Cloudplattform umfangreiche Datenmengen aggregiert und analysiert werden. Durch die gebäudeübergreifende Analyse von (anonymisierten) Daten lassen sich tiefgreifende Analysen durchführen, um funktionale Zusammenhänge zwischen verschiedenen Gebäude- und Umgebungsparametern zu identifizieren.

Die zeitliche Auflösung der Messdaten kann je nach Messort und Systemzustand unterschiedlich gewählt werden. Sie kann pro Temperatursensor fest vorgegeben sein oder in Abhängigkeit weiterer Grössen dynamisch eingestellt werden. Die Auflösung kann auch selbsttätig am Temperatursensor, nur abhängig von den lokal gemessenen Temperaturwerten, nachgestellt werden, z. B. indem die Auflösung für definierte Temperaturbereiche fest vorgegeben ist oder indem die Auflösung in Abhängigkeit einer festgestellten Änderung der lokal gemessenen Temperatur erhöht oder reduziert wird. Mit einer dynamischen Einstellung der Messrate kann der Energieverbrauch im Temperatursensor reduziert werden.

Im Rahmen des erfindungsgemässen Systems dürften in der Regel zeitliche Auflösungen zwischen einer Messung pro Sekunde und einer Messung pro Stunde sinnvoll sein. In einzelnen Fällen kann aber auch eine höhere (oder tiefere) Auflösung gewählt werden, um gewisse Vorgänge aufzulösen bzw. um Energie zu sparen. In bestimmten Ausführungsformen können Zeitauflösungen je nach Systemzustand dynamisch angepasst werden.

Das erfindungsgemässe System ermöglicht eine Überwachung des Systems zur Trinkwasserversorgung, wobei mit Hilfe der zeitlich aufgelösten Messdaten der mehreren verteilt angeordneten Temperatursensoren eine Basis geschaffen wird, um verschiedene Zustände und Vorgänge des Systems zu identifizieren. Die Cloudplattform ermöglicht eine zentrale Verarbeitung der erfassten Daten und die Bereitstellung von Verarbeitungsergebnissen, einschliesslich das Erzeugen von Steuer- und/oder Alarmdaten.

In einer bevorzugten Ausführungsform umfasst das lokale Netzwerk

a) mehrere verteilt angeordnete Gateways, wobei jeder der Temperatursensoren mit mindestens einer der Gateways zur Übermittlung von Daten verbunden ist; und
b) einen Router, der mit einem übergeordneten Kommunikationsnetz und mit den Gateways zur Übermittlung von Daten verbunden ist.

Die Daten können unidirektional von den Temperatursensoren an die jeweilige Gateway übertragen werden. Optional ist auch eine bidirektionale Übertragung zwischen Sensor und Gateway möglich, so kann beispielsweise von der über die Gateway eine Messung am Sensor ausgelöst oder die zeitliche Auflösung angepasst werden. Ebenfalls ist so eine Fernkalibrierung möglich. Die Übermittlung zwischen Sensor und Gateway kann wie oben beschrieben drahtlos oder drahtgebunden erfolgen. Bevorzugt sind Verbindungen via Ethernet, BLE, ZigBee bzw. ZigBee Pro, LoRa oder Thread.

Die Gateways wiederum können insbesondere über Ethernet und/oder WLAN mit dem Router gekoppelt sein. Zwischen Gateways und Router ist mit Vorteil eine bidirektionale Übertragung von Daten möglich. Beim übergeordneten Kommunikationsnetz handelt es sich insbesondere um das Internet. Die Datenübertragung in diesem übergeordneten Kommunikationsnetz erfolgt mit Vorteil gesichert durch TLS (Transport Layer Security).

Bevorzugt werden die Gateways mit Netzstrom versorgt. Sie sind mit Vorteil so angeordnet, dass die Datenübertragung von den Temperatursensoren zuverlässig und mit geringem Energiebedarf erfolgen kann, so dass diese bei Bedarf von einer Batterie mit langer Lebensdauer gespeist werden können und nicht für jeden Temperatursensor ein Netzanschluss benötigt wird.

Die Gateways können die von den Temperatursensoren erhaltenen Daten insbesondere wandeln (z. B. von analogen zu digitalen Signalen), filtern, aggregieren, mit Kennungen und Zeitstempeln versehen, verschlüsseln und/oder komprimieren. Dies hat mehrere Vorteile:

- gewisse zeitkritische Operationen können lokal und damit schneller erfolgen, weil Verzögerungen aufgrund der Latenzen zwischen Gateway und Cloudplattform vermieden werden;

- gewisse kritische Operationen können auch dann erfolgen, wenn die Netzverbindung zur Cloudplattform temporär beeinträchtigt ist;

- die zu übertragende Datenmenge zwischen Gateway und Cloudplattform und die auf der Cloudplattform zu verarbeitende und ggf. zu speichernde Datenmenge können reduziert werden;

- die über das übergeordnete Kommunikationsnetz übertragenen Daten können gegen eine unberechtigte Einsicht Dritter (zusätzlich) geschützt werden;

- die lokalen Temperatursensoren werden von Aufgaben entlastet (z. B. dem Generieren von Zeitstempeln), was deren Konstruktion vereinfacht und Energiebedarf reduziert.

Entsprechend ermöglicht eine Edge-Computing-Ebene eine erhöhte Reaktionsfähigkeit und Zuverlässigkeit, indem die Datenübertragung zwischen den Sensoren und der Cloudplattform reduziert wird. Die Kombination des Edge Computing mit Filtertechniken mit intelligenten Algorithmen ermöglicht die Analyse und Klassifizierung von Daten in Echtzeit für eine schnellere Reaktion. Ausserdem kann der Konfigurationprozess in den Hintergrund verlagert werden, wodurch bedienerabhängige Einflüsse reduziert werden.

Gewisse Operationen können standardmässig via Cloudplattform durchgeführt werden, und nur bei Beeinträchtigungen der Verbindung zwischen Gateway und Cloudplattform ganz oder teilweise lokal ausgeführt werden (Fallback-Lösung).

Beim Router kann es sich um ein fernverwaltetes Gerät handeln, das Messdaten der Sensoren und angebundenen Geräte empfängt und dynamisch verarbeitet (Edge Computing) und abgeleitete Ergebnisse selektiv an die Cloudplattform übermittelt. Die Verarbeitung kann u. a. mittels eines embedded AI/Machine-Learning-Modells erfolgen.

Im Markt sind Komponenten verfügbar, die für die Funktion als Gateway geeignet sind: Sie verfügen über eine CPU, RAM und Kommunikationsschnittstellen, sind kompakt aufgebaut und für eine direkte Anbindung an Cloud-Dienste vorbereitet.

Bevorzugt stellt mindestens eine der Gateways eine Schnittstelle für eine direkte Übermittlung von Daten mit einem lokalen Endgerät bereit, und Messdaten und Steuerdaten sind über die Gateway zwischen dem lokalen Endgerät und einem mit der Gateway verbundenen Temperatursensor und/oder einem mit der Gateway verbundenen Sanitärgerät übermittelbar.

Die direkte Übermittlung kann insbesondere mittels Bluetooth, Bluetooth Low Energy, WLAN, LoRa oder Thread erfolgen. Bei den Sanitärgeräten kann es sich z. B. um folgende handeln:

a) zentrale und/oder dezentrale Warmwasseraufbereitungseinrichtungen (Etagenboiler), insbesondere Wärmepumpenboiler;

b) fernsteuerbare Zirkulationsventile;

c) andere fernsteuerbare Regel- oder Absperrventile;

d) Entkalkungsanlagen (Ionentauscher).

Bei den lokalen Endgeräten handelt es sich insbesondere um Smartphones, Tablet-Computer oder andere portable Computer.

Je nach Gerät und Anwendung können Steuerdaten und/oder Zustandsdaten von der Gateway zum Sanitärgerät und/oder Messdaten und/oder Zustandsdaten vom Sanitärgerät zur Gateway übermittelt werden. Die von der Gateway an das Sanitärgerät zu übertragenden Steuer- und oder Zustandsdaten können lokal auf der Gateway, durch ein anderes angebundenes Endgerät oder in der Cloudplattform erzeugt worden sein.

Ferner können weitere Sensoren, z. B. Durchflusssensoren und/oder Drucksensoren an die Gateways angebunden sein.

Weiter können Gateways zum Austausch von Daten auch direkt an Gebäudeautomationssysteme (BAS) des zu versorgenden Gebäudes angebunden sein, z. B. über ein Bussystem (Feldbus, z. B. nach Modbus-Standard, CAN, CANopen, KNX oder BACnet) oder Ethernet (Applikationsschicht). Dabei kann die Gateway insbesondere Mess- und Steuerdaten an das Gebäudeautomationssystem weitergeben oder Zustands- bzw. Messdaten vom Gebäudeautomationssystem empfangen. Sind steuerbare Sanitärgeräte an die Gateway angebunden, können auch Steuerdaten vom Gebäudeautomationssystem von der Gateway an die entsprechenden Sanitärgeräte weitergereicht werden.

In einer bevorzugten Ausführungsform des erfindungsgemässen Systems sind in der Cloudplattform in Abhängigkeit der Messdaten Steuerdaten erzeugbar und über das übergeordnete Kommunikationsnetz und das lokale Netzwerk zu einem mit der Gateway verbundenen Sanitärgerät übermittelbar. Dabei umfasst das System insbesondere mindestens eine der folgenden Vorrichtungen als Sanitärgerät:

a) einen Etagenboiler;

b) ein fernsteuerbares Zirklulationsventil.

In Abhängigkeit der erfassten Messwerte für die Temperaturen an verschiedenen Stellen des Leitungsnetzes lassen sich somit Komponenten des Systems steuern. Anwendungsfälle sind weiter unten beschrieben.

Wie bereits erwähnt, kann das Leitungssystem erste Leitungen zur Verteilung von Kaltwasser und zweite Leitungen zur Verteilung von Warmwasser umfassen. Dabei umfassen die Temperatursensoren erste Temperatursensoren zur Bestimmung einer Kaltwassertemperatur und zweite Temperatursensoren zur Bestimmung einer Warmwassertemperatur. So lassen sich beide Verteilnetze und ihre gegenseitigen Wechselwirkungen überwachen.

Mit Vorteil ist die Cloudplattform zum Empfang weiterer Daten von externen Quellen eingerichtet, wobei die weiteren Daten mindestens eine der folgenden umfassen:

a) Wetterdaten;

b) Daten eines im Gebäude angeordneten $CO_2$-Sensors;

c) Daten eines im Gebäude angeordneten Geräuschpegelsensors;

d) Daten einer Alarmanlage des Gebäudes;

e) Kalenderdaten eines Bewohners des Gebäudes;

f) Daten eines Automationssystems des Gebäudes.

Diese Daten ermöglichen die Erkennung von Betriebszuständen oder Störungen oder dienen als Basis für Vorhersagen. Anwendungsfälle sind weiter unten beschrieben.

Bei den Wetterdaten kann es sich um lokal erhobene Daten handeln (z. B. Daten für die Aussentemperatur, die Luftfeuchtigkeit, den Luftdruck, die Windstärke und -richtung usw.). Diese lokal erhobenen Daten können von einer Wetterstation bereitgestellt oder z. B. aus den Produktionsdaten einer Photovoltaikanlage (PV-Anlage) abgeleitet werden. Die Wetterdaten können aber auch von einem Drittanbieter zur Verfügung gestellt werden, wobei sie bestmöglich die Situation am Ort des Gebäudes beschreiben sollen. Die Wetterdaten können nebst oder anstelle von aktuellen Daten Prognosedaten umfassen.

Es sind kostengünstige Systeme auf dem Markt verfügbar, die Wetterdaten, $CO_2$-Werte und Geräuschpegelwerte erfassen und über eine Programmierschnittstelle (API) verfügbar machen, im Consumerbereich z. B. das System der Netatmo S.A., Boulogne-Billancourt, Frankreich. Auch auf Daten von Alarmanlagen oder Kalenderdaten lässt sich oft über APIs zugreifen. Die Daten der Automationssysteme können von der Cloudplattform ebenfalls über APIs und/oder die direkte Verbindung mit einer der Gateways erhalten werden.

Mit Vorteil ist die Cloudplattform dazu eingerichtet, anhand der Messdaten der mehreren verteilt angeordneten Temperatursensoren zu überprüfen, ob die entsprechenden Wassertemperaturen vorgegebenen Sollbereichen entsprechen. Separate Sollbereiche können für Kalt- und Warmwasser bzw. an unterschiedlichen Stellen des Leitungssystems vorgegeben werden.

So kann z. B. vorgegeben werden, dass die Kaltwassertemperatur eine Maximaltemperatur, z. B. 25 °C, nirgends übersteigen soll.

Mit Vorteil erfolgt die Überwachung der Temperaturen mit einer zeitlichen Auflösung von 30 Minuten oder häufiger.

Die für die Überwachung der Wassertemperatur beigezogenen Temperatursensoren sind insbesondere an folgenden Stellen im Leitungssystem angeordnet:

- am Hauswassereingang;

- an den Ausgängen der Boiler;

- an der Rückleitung einer Zirkulationsleitung;

- an den Abzweigungen zu den einzelnen Einheiten und/oder im Bereich der Entnahmestellen.

Wenn eine Wassertemperatur ausserhalb des Sollbereichs liegt, kann z. B. eine der folgenden Aktionen (oder eine Kombination davon) ausgelöst werden:

a) Einschalten einer Zirkulationsleitung (durch Öffnen eines Zirkulationsventils und/oder Einschalten einer Zirkulationspumpe) bzw. Erhöhung der Zirkulation in einer Zirkulationsleitung;

b) Einschalten oder Hochregeln einer zentralen oder dezentralen Vorrichtung zur Warmwasseraufbereitung;

c) Alarmierung eines Nutzers oder eines Gebäudedienstleisters (siehe unten).

Mit dem erfindungsgemässen System lässt sich eine regelkonforme Überwachung der Kalt- und Warmwassertemperaturen erreichen:

- Gewisse Normen sehen vor, dass vor der Messung der entsprechenden Temperatur das Wasser an der Messstelle für eine gewisse Zeitdauer zirkulieren soll, damit thermische Einflüsse der Umgebung auf das Messergebnis vermieden werden. Im Rahmen des erfindungsgemässen Systems ist - wie weiter unten beschrieben - die Zirkulation anhand der Temperaturmessungen feststellbar, und es kann ein Messwert ausgewählt werden, der zeitlich unmittelbar nach der vorgegebenen Mindestzirkulationsdauer liegt.

- Gewisse Normen sehen vor, dass die Temperaturmessung an mehreren Stellen im Leitungssystem erfolgen muss, z. B. am Kaltwasserzugang, vor und nach dem Boiler sowie am Ausgang der Zirkulation, also bei der Rückführung in den Boiler. Mit dem erfindungsgemässen System können auf einfache Weise Temperatursensoren an diesen Stellen platziert und die entsprechenden Messergebnisse verarbeitet und überprüft werden.

Bevorzugt sind mindestens einige der mehreren verteilt angeordneten Temperatursensoren entlang einer Leitung zur Verteilung von Warmwasser angeordnet, und die Cloudplattform ist dazu eingerichtet, anhand dieser mindestens einigen Temperatursensoren an einem ersten Messort zu überprüfen, ob eine entsprechende erste Wassertemperatur in einem ersten Sollbereich liegt und an einem zweiten Messort zu überprüfen, ob eine entsprechende zweite Wassertemperatur in einem zweiten Sollbereich liegt, der sich vom ersten Sollbereich unterscheidet.

Für die Warmwassertemperatur wird z. B. ein Wert von mindestens 60 °C am Ausgang des Boilers und mindestens 55 °C im Kreislauf vorgegeben. Es kann auch eine Soll-Mindesttemperatur an der Entnahmestelle vorgegeben werden. Mit Hilfe der verteilten Temperatursensoren lässt sich sicherstellen, dass einer Keimbildung, insbesondere einer Bildung von Legionellen, im gesamten Warmwasserleitungssystem vorgebeugt wird und dass an der Entnahmestelle Warmwasser mit der benötigten Temperatur verfügbar ist.

Mit Vorteil ist die Cloudplattform dazu eingerichtet, eine Mitteilung an einen Nutzer auszulösen, wenn

a) eine Wassertemperatur an einem Messort nicht in einem entsprechenden Sollbereich liegt;

b) eine Wassertemperatur sich an einem Messort aus einem entsprechenden Sollbereich hinausbewegt; und/oder

c) eine Wassertemperatur sich an einem Messort in einen entsprechenden Sollbereich hinein bewegt.

Nach einem Ereignis mit einer abweichenden Wassertemperatur kann also gemäss Punkt c) eine erneute Aktion (z. B. eine Benachrichtigung eines Nutzers oder eines Gebäudedienstleisters) erfolgen, wenn die Wassertemperatur wieder im Sollbereich ist. Beispielsweise kann vorgesehen werden, dass bei einem Erstbezug von Trinkwasser nach einer längeren Abwesenheit die Zeitauflösung für die Temperaturmessungen zunächst erhöht wird und dass der Benutzer informiert wird, sobald die Temperatur die vorgegebenen Sollbereiche erreicht hat.

Die Alarmierung bzw. Benachrichtigung kann in Abhängigkeit der Position der Sollwertabweichung und/oder von Anwesenheitsdaten des Mitteilungsempfängers erfolgen. So wird z. B. ein Nutzer nur dann benachrichtigt, wenn er auch im Gebäude anwesend ist bzw. eine Anwesenheit bevorsteht.

Die Cloudplattform kann dazu eingerichtet sein, anhand der Messdaten der mehreren verteilt angeordneten Temperatursensoren Hinweise auf Kalkablagerungen zu ermitteln und insbesondere anhand dieser Hinweise Steuerdaten für eine Entkalkungsvorrichtung zu erzeugen oder zu beeinflussen. Kalkablagerungen führen zu einer Veränderung der Strömungsverhältnisse im betroffenen Leitungsabschnitt. Dies wiederum kann zu einer Veränderung des Temperaturprofils führen, z. B. weil aufgrund einer reduzierten Strömung eine stärkere Erwärmung von im Leitungsabschnitt geführten Kaltwasser bzw. eine stärkere Abkühlung von im Leitungsabschnitt geführten Warmwasser aufgrund der Umgebungstemperatur resultiert. Derartige Veränderungen lassen sich insbesondere durch Vergleiche mit historischen Daten erkennen, was einen Rückschluss auf das Vorhandensein von Kalkablagerungen ermöglicht. Der Vergleich kann insbesondere mittels Unsupervised (und ggf. Supervised) Machine-Learning-Methoden erfolgen.

Durch das Vermeiden von Kalkablagerungen wird die Trinkwasserqualität erhöht, da in Abschnitten mit reduzierter Durchflussgeschwindigkeit das Wasser länger verbleibt, was die Entstehung bzw. Vermehrung von Bakterien begünstigt. Ebenso kann die Bildung von kalkbedingten Stagnationsbereichen verhindert werden, die aufgrund des dort fehlenden Wasserflusses und der entsprechenden Erwärmung des gestauten Wassers ebenfalls ideale Bereiche für die Vermehrung von Bakterien darstellen.

Mit Vorteil ist die Cloudplattform dazu eingerichtet, anhand der Messdaten mindestens einiger der mehreren verteilt angeordneten Temperatursensoren Hinweise auf ein Vorhandensein und eine Lokalität eines Lecks im Leitungssystem zu ermitteln.

Wenn im Leitungssystem geführtes Wasser durch Lecks austritt, ergeben sich Änderungen im Temperaturverlauf des im Leitungssystem geführten Wassers. Ein Leck in einer Wasserleitung hat insbesondere zur Folge, dass stromaufwärts stetig neues Wasser nachströmt, was in einer Kaltwasserleitung dazu führt, dass sich das Wasser im entsprechenden Leitungsabschnitt bei fehlendem Bezug weniger schnell erwärmt als ohne Leck. Diese Veränderung kann insbesondere durch Vergleiche mit historischen Daten erkannt werden, und auch hier kann der Vergleich insbesondere mittels Unsupervised (und ggf. Supervised) Machine-Learning-Methoden erfolgen. Analog dazu kann ein Leck in einer Warmwasserleitung anhand einer reduzierten Abkühlung im Leitungsabschnitt stromaufwärts des Lecks detektiert werden.

Auch beim Bezug von Kalt- oder Warmwasser führen Lecks in der Zuführung zu einem unterschiedlichen thermischen Verhalten. So bewegt sich aufgrund der reduzierten Wassermenge im stromabwärts des Lecks liegenden Leitungsabschnitt die Wassertemperatur weniger schnell von der Umgebungstemperatur weg (sinken bei Kaltwasser, steigen bei Warmwasser) als im Leitungsabschnitt oberhalb des Lecks. Durch einen Vergleich der Messdaten von Temperatursensoren in den beiden Abschnitten lässt sich dies erkennen. Somit deuten auch anomal wachsende Unterschiede zwischen den Temperatur-Messwerten benachbarter Temperatursensoren auf ein Leck hin, das zwischen diesen Sensoren aufgetreten ist.

Mit Vorteil werden also die Hinweise auf ein Vorhandensein und eine Lokalität eines Lecks im Leitungssystem anhand eines zeitlichen Verlaufs der Messdaten ermittelt, wobei insbesondere zeitliche Verläufe mindestens zweier beabstandet entlang einer Leitung angeordneter Temperatursensoren verglichen werden.

Aus dem Temperaturprofil lässt sich zunächst ein Durchfluss bestimmen oder es wird direkt auf das Vorhandensein bzw. Nichtvorhandensein eines Lecks geschlossen.

Für die Detektion von Lecks können unterschiedliche Zeitauflösungen gewählt werden. Eine Zeitauflösung von einer Messung pro Minute oder öfter ist von Vorteil, damit Phasen mit und ohne Wasserbezug klar unterschieden werden können und damit Phasen mit längerem Nichtbezug, in denen sich die Unterschiede zwischen der Situation ohne und derjenigen mit Leck klar abzeichnen, sicher erfasst werden. Die für die Detektion herangezogenen Temperatursensoren befinden sich insbesondere vor Abzweigungen und jeweils am Beginn und Ende eines Leitungsabschnitts.

Da die Erwärmung bzw. Abkühlung von der Temperatur in der Umgebung des Leitungsabschnitts abhängig ist, kann es sinnvoll sein, nebst den Wassertemperaturen im Leitungssystem auch die Temperatur in der Umgebung des Rohres heranzuziehen. Diese kann durch einen Umgebungstemperatursensor innerhalb des Systems oder durch Daten einer externen Quelle erhalten werden.

Wenn Druck- und/oder Durchflusssensoren vorhanden sind, können diese in die Auswertung mit einbezogen werden. Auch wenn durch solche Sensoren das Leck unmittelbarer bestimmt werden kann, tragen die Messwerte der Temperatursensoren zur sicheren Erkennung und zur verbesserten Abschätzung des Orts der Leckage bei. Zudem dürften in vielen Leitungsnetzen nicht alle Abschnitte durch Druck- und/oder Durchflusssensoren abgedeckt sein.

Wird ein Leck festgestellt, erfolgt insbesondere die Alarmierung eines Nutzers oder eines Gebäudedienstleisters. In der Bauphase kann direkt der verantwortliche Installateur benachrichtigt werden. Alternativ oder zusätzlich kann ein fernsteuerbares Absperrventil betätigt werden, um den weiteren Fluss von Wasser in den Abschnitt mit Leck und damit mögliche Wasserschäden zu verhindern. Falls das System über Informationen zur An- oder Abwesenheit von Personen verfügt, kann das Absperren im Abwesenheitsfall schneller ausgelöst werden als im Anwesenheitsfall. Zudem kann die Alarmierung gezielter erfolgen, z. B. an einen Verwalter, wenn das System davon ausgeht, dass die Bewohner bzw.

Benutzer abwesend sind, und direkt an die Bewohner bzw. Benutzer, wenn diese anwesend sein dürften.

Mit Vorteil ist die Cloudplattform dazu eingerichtet, einen thermischen Energieverbrauch anhand der Messdaten mindestens eines der mehreren verteilt angeordneten Temperatursensoren und eines zugeordneten Durchflusssensors zu bestimmen.

Der thermische Energieverbrauch ergibt sich dabei unmittelbar aus dem Produkt des Volumenstroms, der Dichte, der spezifischen Wärmekapazität des Wassers und der jeweiligen Temperaturdifferenz. Wenn die Temperaturdifferenz zwischen zwei beabstandeten Sensoren an demselben Leitungsabschnitt in Betracht gezogen wird, ergibt sich der thermische Energieverlust in diesem Abschnitt (insbesondere in Bezug auf Warmwasser). Wird die Differenz zwischen Warm- und Kaltwassertemperatur berücksichtigt, kann die thermische Heizleistung einer Warmwasseraufbereitungsanlage bestimmt werden. Angaben zu thermischen Verlusten oder zur benötigten Heizleistung können in ein System zur Optimierung des Energieverbrauchs im gesamten Leitungssystem herangezogen werden.

Energie-Verbrauchsdaten können zudem über die Cloudplattform den Benutzern zugänglich gemacht werden und diese dabei unterstützen, den Energieverbrauch in ihrem Gebäude bzw. Gebäudeteil zu reduzieren.

Mit Vorteil ist die Cloudplattform dazu eingerichtet, anhand der Messdaten mindestens einiger der mehreren verteilt angeordneten Temperatursensoren eine Anwesenheit oder Abwesenheit von Benutzern abzuleiten.

Erfolgt kein Kalt- bzw. Warmwasserbezug wird sich die Temperatur des stehenden Wassers in den entsprechenden Leitungsabschnitten der Umgebungstemperatur (Raumtemperatur) angleichen. Ein fehlender Bezug während einer längeren Zeitperiode deutet auf eine Abwesenheit der Nutzer hin. Eine Abstützung auf Temperaturdaten hat dabei gegenüber einer direkten Erfassung des Wasserbezugs den Vorteil, dass auch bei einer geringen Zeitauflösung der fehlende Bezug erkennbar ist, weil sich bei einem Bezug die Temperatur im überwachten Leitungsabschnitt unmittelbar neu einstellt. Zudem werden keine dedizierten Sensoren benötigt.

In einem Gebäude mit mehreren Einheiten (z. B. Wohnungen) kann die Anwesenheit pro Einheit bestimmt und verarbeitet werden.

Es kann von Vorteil sein, wenn nebst der Wassertemperatur auch die Umgebungstemperatur berücksichtigt wird. Wie oben erwähnt, kann die Umgebungstemperatur im Rahmen des Systems selbst gemessen oder von externen Quellen erhalten werden.

Weitere externe Daten, die sehr hilfreich sein können, sind Kalenderdaten der Bewohner des Gebäudes. Diese können auf Ferienabwesenheiten oder - insbesondere bei Zweitwohnungen - auf Anwesenheiten hindeuten.

Mit Vorteil ist die Cloudplattform dazu eingerichtet, anhand der abgeleiteten Anwesenheit oder Abwesenheit Steuerdaten für eine haustechnische Anlage, insbesondere eine Warmwasseraufbereitungsanlage oder eine HLK-Anlage, zu erzeugen oder zu beeinflussen. Diese Steuerdaten sind insbesondere für im Rahmen des Systems steuerbare Komponenten bestimmt, z. B. zentrale bzw. dezentrale Boiler, Zirkulationspumpen und -ventile. Sie können auch zur Steuerung direkt oder indirekt angebundener externer Komponenten dienen, z. B. einer HLK-Anlage, Beschattungsanlagen, Beleuchtungseinrichtungen, Alarmanlagen oder Ladesysteme für Batterien (stationär und E-Autos). Durch die an- bzw. abwesenheitsabhängige Steuerung lassen sich der Energieverbrauch des Gesamtsystems reduzieren und/oder der Komfort für die Benutzer steigern.

Mit Hilfe von systeminternen oder -externen Daten kann eine bevorstehende An- oder Abwesenheit auch prognostiziert werden. Direkt ist dies über die Kalendereinträge der Bewohner möglich. Indirekt lässt sich aus einer Abwesenheit am Erstdomizil eine gewisse Wahrscheinlichkeit für eine bevorstehende Anwesenheit am Feriendomizil ableiten (und umgekehrt).

Bevorzugt ist die Cloudplattform dazu eingerichtet, anhand der Messdaten mittels eines selbstlernenden Systems Steuerdaten für eine haustechnische Anlage, insbesondere eine Warmwasseraufbereitungsanlage oder eine HLK-Anlage, zu erzeugen oder zu beeinflussen, wobei das selbstlernende System anhand der Messdaten und von Energie- und/oder Wasserverbrauchsdaten regelmässig aktualisiert wird.

Das selbstlernende System wird insbesondere mit Daten aus der Vergangenheit trainiert, insbesondere mittels an sich bekannter Machine-Learning-Prozesse. Diese Daten entsprechen Messwerten der Temperatur im Leitungsnetz, der Umgebungstemperatur, jeweils an mehreren, nicht notwendigerweise übereinstimmenden, Stellen, Verbrauchsdaten, gegebenenfalls Anwesenheitsdaten und weiteren Parametern aus dem System oder aus externen Quellen. Die Daten sind jeweils mit einem Zeitstempel versehen. Im Rahmen des Trainingsprozesses ergibt sich ein Modell, das die Beziehung zwischen diesen Daten und dem Energie- und/oder Wasserverbrauch beschreibt. Das Modell kann dann zur Vorhersage des Energie- und/oder Wasserverbrauchs in zukünftigen Zeiträumen verwendet werden. So lassen sich auch verschiedene Szenarien vergleichen.

Aufgrund der grossen Datenmengen basiert das Modell bevorzugt auf einem tiefen neuronalen Netz (deep neural network). Ein solches ist geeignet, die komplexen Beziehungen zwischen den Messdaten und dem Energie- bzw. Wasserverbrauch abzubilden.

Die Steuerdaten ergeben sich insbesondere aus einem Optimierungsprozess mit dem Ziel, den Wasser- und/oder Energieverbrauch unter Einhaltung von Sollparametern, insbesondere in Bezug auf die Kalt- und Warmwassertemperaturen, zu minimieren.

Auch diese Steuerdaten sind insbesondere für im Rahmen des Systems steuerbare Komponenten bestimmt, z. B. zentrale bzw. dezentrale Boiler, Zirkulationspumpen und -ventile. Sie können auch zur Steuerung direkt oder indirekt angebundener externer Komponenten dienen, z. B. einer HLK-Anlage, Beschattungsanlagen, Beleuchtungseinrichtungen oder Ladesysteme für Batterien (stationär und E-Autos).

Die Steuerdaten sind dabei bevorzugt weiter anhand von Daten zu verfügbarer lokal erzeugter elektrischer Energie und/oder Wetterdaten in Echtzeit beeinflussbar. Bei der lokal erzeugten elektrischen Energie handelt es sich insbesondere um photovoltaisch erzeugte Energie, es kann sich aber auch z. B. um lokal erzeugte Windenergie oder Energie aus einem lokalen Blockheizkraftwerk handeln. Erzeugungsdaten lassen sich direkt von der entsprechenden Anlage, z. B. von einem Wechselrichter einer PV-Anlage, empfangen oder aus einer Drittanbieter-Cloud, auf die über eine Programmierschnittstelle zugegriffen werden kann. Relevante Daten können gegebenenfalls auch von einem Smart Meter eines Energieversorgers erhalten werden.

Die Daten können die aktuell erzeugte elektrische Energie unmittelbar repräsentieren, oder letztere wird aus den Wetterdaten abgeleitet. Die Berücksichtigung der vorhandenen elektrischen Energie oder gegebenenfalls eines lokalen Überschusses an elektrischer Energie ermöglicht eine Steuerung von Einrichtungen mit Speicherfunktion (z. B. von Warmwasseraufbereitungsanlagen) in einer solchen Weise, dass sie möglichst mit lokal erzeugter elektrischer Energie betrieben werden. Die Nutzung der elektrischen Energie kann z. B. bei einem Wärmepumpenboiler durch Aktivierung der Wärmepumpe erfolgen, es sind aber auch Geräte mit einem zusätzlichen Heizstab im thermischen Speicher verfügbar, der als Widerstandsheizung funktioniert und auch kurzzeitige grössere Strom-Überproduktionen in Wärme umwandeln kann (power to heat). Gegebenenfalls kann temporär auch die Solltemperatur eines thermischen Speichers erhöht werden. Die Einspeisung ins Stromnetz und der Bezug aus dem Stromnetz werden somit reduziert, was letztlich finanzielle Vorteile für den Nutzer hat, und die Belastung des Stromnetzes sowie unnötige Leitungsverluste reduziert.

Mit Vorteil umfasst mindestens einer der mehreren verteilt angeordneten Temperatursensoren eine an einer Aussenseite eines Rohrs der Leitung des Leitungssystems angeordnete Sensoreinheit, und anhand von Messsignalen der Sensoreinheit wird eine Temperatur des an der Messstelle im Rohr geführten Trinkwassers errechnet, insbesondere mittels eines Supervised-Machine-Learning-Modells.

Das Machine-Learning-Modell bringt die an der Rohraussenseite gemessene Temperatur in einen Zusammenhang mit der Temperatur des im Rohr geführten Wassers. Zur Errechnung der Temperatur können der zeitliche Verlauf der Temperatur auf der Aussenseite und/oder die Umgebungstemperatur des Rohrs mitberücksichtigt werden. Für die Umgebungstemperatur kann eine separate Sensoreinheit am Temperatursensor vorgesehen sein; sie kann aber auch aus externen Quellen erhalten werden.

Da das Material und die Geometrie des Rohrs einen Einfluss auf den Zusammenhang zwischen der Wassertemperatur und der an der Rohraussenseite gemessenen Temperatur haben, kann es sinnvoll sein, wenn das Machine-Learning-Modell bzw. ein separates Modell in der Lage ist, die Art des Rohrs automatisch zu ermitteln. Diese Ermittlung kann sich insbesondere auf den zeitlichen Verlauf der Änderung der Aussentemperatur, z. B. nach Beginn eines Bezugs aus der entsprechenden Leitung, stützen. Auch die Messwerte weiterer Temperatursensoren, für die die Materialzuordnung gegebenenfalls bereits erfolgt ist, können als Vergleichswerte herangezogen werden.

Die Berechnung der Temperatur kann lokal im Sensor oder in einer zugeordneten Gateway oder auf der Cloudplattform erfolgen.

Temperatursensoren, die an der Aussenseite des Rohrs angebracht werden können, haben den grossen Vorteil, dass sie einfach montierbar sind - ein Eingriff in die Leitung kann komplett vermieden werden.

Bei einer bevorzugten Ausführungsform weist der Temperatursensor eines oder mehrere der folgenden Merkmale auf:

- Als Sensor wird ein Widerstandstemperatursensor eingesetzt, also ein Element, dessen Widerstand sich in Abhängigkeit der Temperatur ändert (Resistance Temperature Detector, RTD); geeignet ist z. B. ein PT100-Messelement, ein Temperaturfühler, der ein Platinelement umfasst, dessen Nennwiderstand bei 0 °C 100 Ω beträgt.

- Der Temperatursensor umfasst einen A/D-Wandler zum Generieren eines digitalen Signals; geeignet ist z. B. der Typ MAX31865 der Analog Devices, Inc., Wilmington, Massachusetts, USA, der spezifisch an RTDs angepasst ist.

- Der Temperatursensor ist batteriebetrieben. Die elektrische Energie wird insbesondere durch eine Lithium-Batterie bereitgestellt. Diese weist eine sehr lange Lebensdauer auf, so dass bei entsprechend energiesparender Konzeption ein Batteriewechsel erst nach ca. 10 Jahren notwendig wird.

- Die Datenübertragung vom Temperatursensor zur Gateway erfolgt drahtlos, insbesondere mittels LoRa. Dieses Netzprotokoll ermöglicht einen sehr energiesparenden Betrieb. Im Temperatursensor und in der Gateway sind entsprechende Schnittstellen bereitgestellt.

Konkrete Alternativen für die drahtlose Datenübertragung sind WLAN (mittels Modbus-Protokoll) oder Thread (mittels Matter-Protokoll). Alternativ werden die Messdaten drahtgebunden übertragen, z. B. mittels Kupferkabel oder Ethernet. Die Stromversorgung kann alternativ von der Gateway erfolgen, insbesondere bei kabelgebundener Datenübertragung, oder über ein externes Netzgerät.

Bevorzugt ist die Cloudplattform dazu eingerichtet, eine Zuordnung mindestens eines der mehreren verteilt angeordneten Temperatursensoren zu einer Leitung des Leitungssystems und/oder eine Lokalisierung des mindestens einen Temperatursensors entlang dieser Leitung anhand der Messdaten automatisch zu bestimmen.

Dadurch wird eine automatische Einrichtung hinzugefügter Temperatursensoren («Plug & Play») ermöglicht. Dass ein neuer Temperatursensor automatisch zugeordnet und/oder im Leitungssystem lokalisiert werden kann, kann von gewissen Bedingungen abhängig sein. So kann es notwendig sein, dass bereits eine gewisse Anzahl an Temperatursensoren vorhanden und konfiguriert sind (inklusive Zuordnung bzw. Lokalisierung) und/oder es muss ein Plan des Leitungssystems hinterlegt sein, z. B. aus einem BIM-Prozess oder gestützt auf einen digitalen Zwilling des Bauwerks. Ebenso kann als weitere Information (im Sinn einer ersten groben Ortsabschätzung) die Zuordnung zu einer von mehreren Gateways herangezogen werden.

Falls das System in einem spezifischen Fall erkennt, dass keine automatische Zuordnung vorgenommen werden kann, kann der Installateur aufgefordert werden, ergänzende Informationen zum zusätzlichen Temperatursensor einzuspeisen.

Die Bestimmung der Zuordnung bzw. Lokalisierung des Temperatursensors bzw. der Topologie des Leitungssystems oder eines Abschnitts davon kann allein auf die Messdaten der mehreren verteilt angeordneten Temperatursensoren gestützt sein. Ergänzend können aber weitere Sensordaten, z. B. von Durchfluss- und/oder Drucksensoren, herangezogen werden.

Gemäss einem ersten Ansatz wird ein Machine-Learning-Modell verwendet, das auf Basis der Messdaten mehrerer Temperatursensoren die Durchflussgeschwindigkeiten in den relevanten Leitungen abschätzt. Gestützt auf diese Abschätzungen kann dann die Lokalisierung des Temperatursensors durchgeführt werden.

Gemäss einem weiteren Ansatz wird ein Machine-Learning-Modell verwendet, das auf Basis der (gleichzeitig erhobenen) Messdaten mehrerer Temperatursensoren direkt die Position des neuen Temperatursensors abschätzt.

Die Machine-Learning-Modelle können z. B. auf einem künstlichen neuronalen Netz basieren. Dieses kann mit historischen Daten zu Temperaturen bzw. Durchflussgeschwindigkeiten sowie Zuordnungen bzw. Positionen von Temperatursensoren trainiert werden.

Für die Zuordnung bzw. Lokalisierung können auch dynamische Informationen der Messdaten herangezogen werden: So vergeht beispielsweise eine gewisse Zeitdauer, bis in einer (teilweise) abgekühlten Warmwasserleitung neu zugeführtes Warmwasser einen bestimmten Abschnitt der Leitung erreicht und dort zu einer Erhöhung der gemessenen Wassertemperatur führt. Durch einen Vergleich der Zeitdauern lässt sich der Ort des entsprechenden Temperatursensors ermitteln. Analog dazu ergibt sich in einer (teilweise) erwärmten Kaltwasserleitung ein zeitlicher Offset der Temperaturabsenkung, der von der Entfernung vom Wasseranschluss abhängig ist.

Die Lokalisierung (und gegebenenfalls die Zuordnung) können in einer ersten Phase provisorisch erfolgen und dann mit zunehmender in Betracht gezogener Datenmenge sukzessive verbessert werden.

Die verschiedenen über die Cloudplattform bereitgestellten Funktionalitäten können insbesondere von jedem Kunden individuell abonniert werden. Sie werden dazu als Funktionsmodule angeboten, die zu einem Grundangebot je nach Ausrüstung der jeweiligen Gebäude und dem individuellen Bedarf dazu gebucht werden können.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1         eine schematische Darstellung einer Ausführungsform eines erfindungsgemässen Systems zur Trinkwasserversorgung eines Gebäudes; und

Fig. 2a-d     Temperaturverläufe an Messstellen zweier beabstandeter Temperatursensoren beim Nichtvorhandensein und Vorhandensein eines dazwischenliegenden Lecks.

Grundsätzlich sind in den Figuren gleiche Teile mit gleichen Bezugszeichen versehen.

**Wege zur Ausführung der Erfindung**

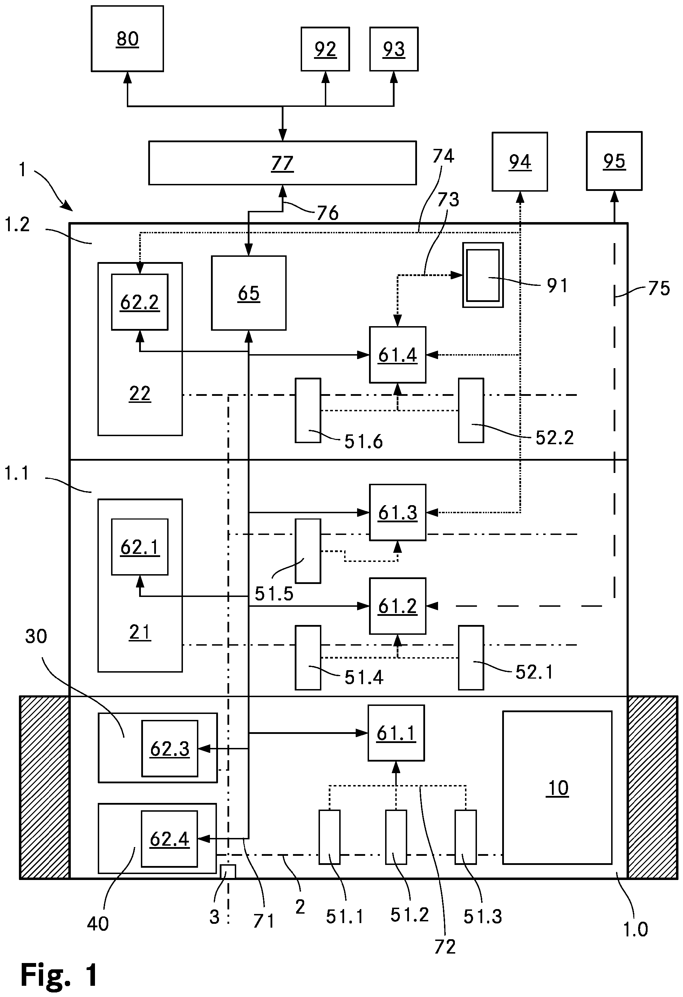

Die Figur 1 ist eine schematische Darstellung einer Ausführungsform eines erfindungsgemässen Systems zur Trinkwasserversorgung eines Gebäudes. Das dargestellte Gebäude 1 umfasst einen Keller 1.0 und zwei Etagen 1.1, 1.2. Über einen Hausanschluss 3 wird Trinkwasser aus einer Wasserversorgung dem Gebäude 1 zugeführt. Innerhalb des Gebäudes wird Kalt- und Warmwasser über ein nur sehr schematisch dargestelltes Leitungssystem 2 (strichpunktierte Linien) verteilt.

An das Leitungssystem 2 sind sanitäre Anlagen sowie Verbraucher (inkl. Entnahmestellen) angeschlossen, wobei hier zugunsten der Übersichtlichkeit nur einige wenige Komponenten dargestellt sind. Diese umfassen namentlich einen zentralen Boiler 10, der im Kellergeschoss 1.0 platziert ist und Warmwasser aufbereitet, das dann über Warmwasserleitungen im Leitungssystem 2 im Gebäude 1 verteilt wird. Im dargestellten Beispiel sind darüber hinaus Etagenboiler 21, 22 gezeigt, die aus einer Kaltwasserleitung des Leitungssystems 2 Kaltwasser beziehen, dieses erwärmen und in Warmwasserleitungen für die jeweilige Etage 1.1, 1.2 einspeisen. Bei den Etagenboilern 21, 22 handelt es sich um Wärmepumpenboiler, die der Umgebungsluft Wärme entziehen und mittels einer Wärmepumpe dem zu erwärmenden Wasser zuführen. Die Etagenboiler 21, 22 umfassen Speicher, so dass eine gewisse Menge erwärmten Wassers für einen späteren Bezug zwischengespeichert werden kann.

Als weitere Komponenten sind ein Zirkulationsventil 30 und ein Ionentauscher 40 dargestellt. Das Zirkulationsventil 30 ermöglicht es, ferngesteuert den Fluss in einer Zirkulationsleitung (für Kalt- oder Warmwasser) abzusperren oder freizugeben. Dazu verfügt es über eine thermomechanisch oder elektronisch geregelte Ventileinheit. Eine Zirkulationsleitung für Warmwasser ermöglicht bei zentraler Warmwasseraufbereitung einen schnellen Bezug von Warmwasser, insbesondere bei hohen Gebäuden. Beim Kaltwasser kann mithilfe der Zirkulationsleitung sichergestellt werden, dass ein ausreichender Wasseraustausch stattfindet, so dass immer frisches Wasser bereitgestellt wird.

Der Ionentauscher dient zur Reduktion des Kalkgehalts des Trinkwassers. Er wird insbesondere zwischen dem Hausanschluss 3 und dem zentralen Boiler 10 (bzw. den Etagenboilern 21, 22) angeordnet.

Das erfindungsgemässe System zeichnet sich nun durch eine Reihe von Temperatursensoren 51.1...51.6 aus, die an unterschiedlichen Stellen im Leitungssystem 2 angeordnet sind und die Temperatur des in der jeweiligen Kalt- oder Warmwasserleitung geführten Trinkwassers messen und entsprechende Messdaten zur Verfügung stellen. Die Temperatursensoren 51.1...6 können in einem ersten Modus betrieben werden, in dem sie in vorgegebenen zeitlichen Abständen Messungen durchführen und die Ergebnisse weitergeben. Der zeitliche Abstand ist dabei veränderbar. Sie können auch in einem zweiten Modus betrieben werden, in dem jede einzelne Messung extern getriggert wird.

Das System umfasst weiter einige Drucksensoren 52.1, 52.2, die ebenfalls verteilt an Leitungen des Leitungssystems 2 angeordnet sind und in denselben Modi betreibbar sind wie die Temperatursensoren 51.1...6. Die Drucksensoren 52.1, 52.2 bestimmen den aktuellen Druck in der entsprechenden Leitung.

Jeder der Temperatursensoren 51.1...6 und jeder der Drucksensoren 52.1, 52.2 ist über eine Datenverbindung 72 (gestrichelt) mit einer Gateway 61.1... 61.4 verbunden. Die Adressierung der Gateways 61.1...4, der Temperatursensoren 51.1...51.6, der Drucksensoren 52.1, 52.2 und weiterer Sensoren und Geräte im System erfolgt über statische oder dynamisch zugewiesene IP-Adressen, wobei auch Komponenten vorhanden sein können, die nicht IP-adressiert sind. Eine eindeutige Identifizierung kann anhand der MAC-Adresse bzw. bei direkter analoger Anbindung anhand des Signaleingangs an der Gateway erfolgen. An einer anderen Gateway 61.1...4 angebundene Komponenten werden indirekt adressiert. Eine indirekte Adressierung erfolgt auch für Komponenten ausserhalb des Systems, die an datenmässig mit dem erfindungsgemässen System verbundene Drittsysteme angebunden sind.

Die Gateways 61.1...4 sind gleichberechtigt, es wird kein Master benötigt. Die Gateways 61.1... 4 empfangen die Messdaten der Sensoren und können diese weiterverarbeiten, insbesondere filtern und aggregieren, und über ein Netzwerk 71 an einen Router 65 (und gegebenenfalls weitere mit dem Netzwerk 71 verbundene Komponenten) übertragen. Die Datenverbindung 72 kann bei unterschiedlichen Sensoren bzw. Gateways unterschiedlich realisiert werden; möglich sind z. B. direkte analoge Drahtverbindungen, direkte digitale Drahtverbindungen (z. B. Ethernet) oder drahtlose Verbindungen (z. B. mittels WLAN, Low Power WiFi, Bluetooth, Bluetooth Low Energy BLE oder LoRa). Das Netzwerk 71 ist als Ethernet-WiFi-Mesh-Netzwerk ausgebildet. So kann eine zuverlässige und schnelle Übertragung von Daten in allen Bereichen des Gebäudes 1 sichergestellt werden.

In einige der sanitären Einrichtungen, namentlich die Etagenboiler 21, 22, das Zirkulationsventil 30 und den Ionentauscher 40, sind eigene Gateways 62.1...62.4 integriert. Diese sind - wie die anderen Gateways 61.1...4 auch - über das Datennetz 71 mit dem Router 65 verbunden. Die eigenen Gateways 62.1...4 der Einrichtungen sind in der Lage, Messund Zustandsdaten der Einrichtungen zu verarbeiten und zu übermitteln sowie Steuerdaten zu empfangen und (gegebenenfalls nach einem Verarbeitungsschritt) an die jeweilige Einrichtung weiterzugeben.

Die Etagenboiler 21, 22 umfassen zwei Temperatursensoren zur Erfassung der Wassertemperatur am Boilereingang und am Boilerausgang. Über die zugeordnete Gateway 62.1, 62.2 können die Messdaten der Temperatursensoren sowie Zustandsinformationen und gegebenenfalls weitere Sensordaten übertragen werden.

Das Zirkulationsventil 30 weist ebenfalls einen integrierten Temperatursensor auf, da es autonom betriebsfähig sein und beim Einsatz in Warmwasserleitungen bei Unterschreitung einer gewissen Minimaltemperatur die Zirkulation freigeben soll. Dank der Einbindung in das erfindungsgemässe System kann das Zirkulationsventil 30 aber zusätzlich in Abhängigkeit der Messwerte externer Temperaturmesspunkte gesteuert werden, und die Messwerte des integrierten Temperatursensors können für weitere Zwecke herangezogen werden, analog zu den übrigen Temperatursensoren im System.

Der Ionentauscher 40 weist einen Füllstandssensor für Enthärtersalz auf, dessen Messdaten über die Gateway 62.4 übertragen werden.

Die Gateways 61.1...4, 62.1...4 sind in der Lage, über eine weitere Datenverbindung 73 direkt mit lokalen Endgeräten zu kommunizieren. Dargestellt ist die Gateway 61.4, die über eine solche Datenverbindung 73 (WiFi bzw. BLE) direkt mit einem Endgerät 91, z. B. einem Tablet-Computer, temporär zum Datenaustausch verbunden ist. So können die jeweilige Gateway bzw. daran angeschlossene oder über das Netzwerk 71 erreichbare Einrichtungen überwacht und gegebenenfalls gesteuert werden. Über eine solche Verbindung ist es beispielsweise auch möglich, Software-Update vorzunehmen oder das System zu konfigurieren oder zu kalibrieren. Dies ist insbesondere in einer Einrichtungsphase von Vorteil, wenn noch keine Konnektivität über den Router 65 besteht oder das Netzwerk 71 nicht oder noch nicht vollständig eingerichtet ist.

Im fertiggestellten Zustand ist der Router 65 über eine Datenverbindung 76 (HTTPS) in an sich bekannter Weise mit dem Internet 77 verbunden. Er ermöglicht den Austausch von Daten mit sämtlichen Gateways 61.1...4,62.1...4 und zwischen den Gateways 61.1...4,62.1...4. Über das Internet 77 sind die Gateways 61.1...4, 62.1...4 insbesondere im Datenaustausch mit einem Cloudplattformserver 80, der eine Cloudplattform bereitstellt, die Daten aggregiert, verarbeitet, speichert und ausgibt. Die Ausgabe erfolgt via Internet 77 über ein web- oder appbasiertes Frontend sowie über Programmierschnittstellen (API). Das Frontend stellt insbesondere ein «Dashboard» zur Verfügung, das eine Übersicht über den aktuellen Status eines Gebäudes oder eines Gebäudeteils vermittelt. Die Cloudplattform verfügt über eine Zugriffsrechteverwaltung, so dass verschiedenen Personen selektiv Zugriff auf Informationen gewährt werden kann, sowohl was die Informationstiefe als auch die anzeigbaren Objekte anbelangt. Grundsätzlich sind mindestens folgende Berechtigungsstufen vorgesehen, wobei die spezifischen Berechtigungen vom Verwalter (Administrator) je nach Bedarf anpassbar sind:

| Personenkreis | Objekt(e) | Informationstiefe |
|---|---|---|
| Bewohner / Benutzer | bewohnte Wohnung, benutzte Büroräume | Statusdaten, Verbrauchsdaten, Steuermöglichkeiten auf Nutzerstufe |
| Verwalter | verwaltete Einheiten / Gebäude | Statusdaten, Verbrauchsdaten, Störungsmeldungen, Predictive Maintenance, Steuermöglichkeiten auf Stufe Facility Management anonymisierte statistische Daten mit Informationen von Drittobjekten |
| Installateur, Dienstleister | betreute Einheiten / Gebäude / Projekte | bereichs- oder gerätespezifische Statusdaten, Störungsmeldungen, Predictive Maintenance |
| Geräteanbieter | Einheiten / Gebäude / Projekte mit betreffenden Geräten | anonymisierte Status- und Verbrauchsdaten, Störungsmeldungen, statistische Daten, ggf. Nutzungsdaten (pay-per-use) |

Der Cloudplattformserver kann über weitere Programmierschnittstellen auf weitere Cloudserver 92 zugreifen, die Cloudplattformen von Drittanbietern bereitstellen, sowie auf Dienstserver 93 von weiteren Drittanbietern, die relevante Daten (z. B. Wetterdaten, Statusdaten von Einrichtungen usw.) bereitstellen und/oder Steuerbefehle für dort angebundene Elemente der Automation des Gebäudes 1 empfangen.

Auf tieferer Stufe angebunden sind zudem Gebäudeautomationssysteme (Building Automation System BAS) 94, 95. Im dargestellten Beispiel ist ein erstes solches Gebäudeautomationssystem 94 über einen Bus 74 (Feldbus, z. B. Modbus) mit mehreren Komponenten des Systems, namentlich zwei Gateways 61.3, 61.4 und der Gateway 62.2 des Etagenboilers 22, verbunden. Das zweite Gebäudeautomationssystem 95 ist über eine Datenverbindung 75 (z. B. drahtgebunden via Matter/Ethernet und/oder drahtlos über Thread) mit einer weiteren Gateway 61.2 verbunden. Über diese weitere Gateway 61.2 kann bei Bedarf ein Austausch von Daten zwischen dem zweiten Gebäudeautomationssystem und weiteren am Netzwerk 71 angebundenen Komponenten stattfinden.

Im Rahmen des erfindungsgemässen Systems können neuartige Temperatursensoren zum Einsatz kommen, bei denen eine Temperatur an mindestens einer Stelle der Rohraussenseite gemessen wird und mithilfe eines mathematischen Modells auf eine Temperatur des im Rohr an der Messstelle geführten Mediums geschlossen wird. Derartige Temperatursensoren umfassen ein Gehäuse, das als Schelle oder Manschette ausgeführt wird, die sich um das Rohr legen lässt. Mithilfe eines Spannmechanismus lässt sich dann das Gehäuse am Rohr befestigen. Der eigentliche Sensor bzw. die eigentlichen Sensoren weisen eine Kontaktfläche auf, die im befestigten Zustand des Temperatursensors fest an der Rohraussenseite anliegt. Diese Kontaktfläche wird insbesondere durch ein in mindestens einer Richtung krümmbares und/oder elastisches Material gebildet, so dass die Kontaktfläche auf ihrer gesamten Ausdehnung die Rohraussenseite kontaktiert.

Die Berechnung der Medientemperatur in Funktion der gemessenen Aussentemperatur erfolgt insbesondere mittels eines Machine-Learning-Modells. Dieses wurde mit Trainingsdaten trainiert, die folgende Elemente (oder eine Teilmenge davon) umfassen:

Als Eingangsdaten:

- eine gemessene Temperatur an der Rohraussenseite (bzw. mehrere Temperaturen, wenn der Temperatursensor mehrere Sensoren umfasst);

- eine Zeitreihe solcher Temperaturmessungen, umfassend einen Zeitraum vor der Bestimmungszeit;

- Aussentemperaturmessungen an anderen Messstellen;- ein Wert für die Umgebungstemperatur am Messort (wenn der Temperatursensor zusätzlich einen Sensor für die Umgebungstemperatur umfasst oder wenn diese Umgebungstemperatur von einer externen Quelle verfügbar ist);

- ein Wert für die Luftfeuchtigkeit am Messort (der Sensor für die Luftfeuchtigkeit kann mit dem Sensor für die Temperatur bzw. den Sensoren für die Temperaturen in einer Baueinheit vereinigt sein oder von einer separaten Systemkomponente bezogen werden);

- ggf. Angaben zum Material (mit und ohne Dämmung) und/oder zur Geometrie des Rohrs.

Als Zieldatum: Die mittels eines im Rohr an der Messstelle angeordneten Sensors gemessene Medientemperatur.

Das Machine-Learning-Modell kann auf an sich bekannten Ansätzen basieren wie z. B. einem neuronalen Netzwerk, einer Support-Vector-Machine oder einem Regressionsmodell.

Im Betrieb wird dann anhand analoger Eingangsdaten mithilfe des Modells die Medientemperatur bestimmt. Diese Bestimmung kann mithilfe von im Sensor integrierter Elektronik oder in einer separaten Einrichtung (z. B. der Gateway oder gar der Cloudplattform) erfolgen. Die Angaben zum Material und/oder zur Geometrie des Rohrs können im Temperatursensor bzw. in der Einrichtung gespeichert sein, Werte von Aussentemperaturmessungen an anderen Messstellen und gegebenenfalls der Umgebungstemperatur können über die jeweilige Gateway empfangen werden. Die Zeitreihe kann im Sensor oder in der separaten Einrichtung vorgehalten werden, wobei die entsprechenden Werte insbesondere für den vorgegebenen Zeitraum in einem Puffer gespeichert werden.

Die Angaben zum Material bzw. zur Geometrie des Rohrs können manuell für die einzelne Messstelle, den Leitungsabschnitt oder das gesamte Leitungsnetz eingespeist werden, z. B. über ein mit einer Gateway verbundenes Endgerät oder ausgehend von der Cloudplattform. Die Materialparameter oder für die Bestimmung der Medientemperatur relevanten materialabhängigen Parameter können aber auch automatisch im Rahmen eines Kalibriervorgangs bestimmt werden, z. B. ausgehend vom zeitlichen Verlauf der Änderung der an der Aussenseite gemessenen Temperatur, z. B. nach Beginn eines Bezugs aus der entsprechenden Leitung. Auch die Messwerte weiterer Temperatursensoren, für die die Materialzuordnung gegebenenfalls bereits erfolgt ist, können als Vergleichswerte herangezogen werden. Dazu können insbesondere auch auf der Cloudplattform verfügbare Daten aus Systemen in anderen an dieselbe Plattform angebundenen Gebäuden genutzt werden.

Im Folgenden werden mehrere Anwendungsfälle beschrieben, die durch das erfindungsgemässe System und in dessen Rahmen ermöglicht werden. Die Anwendungen lassen sich über das Frontend der Cloudplattform aktivieren bzw. deaktivieren und verwalten. Über die Cloudplattform erfolgt auch die Visualisierung von Ergebnissen, die Generierung von Steuerbefehlen und das Absenden von Mitteilungen.

**Sicherstellung der Trinkwasserhygiene**

Das erfindungsgemässe System ermöglicht eine Überwachung des Leitungssystems mit dem Ziel, die darin herrschenden Bedingungen, insbesondere Temperaturen, so einzustellen, dass sie eine bestmögliche Trinkwasserhygiene (sowohl für Warm- als auch für Kaltwasser) ermöglichen.

Die Cloudplattform überprüft dazu anhand der empfangenen Messdaten der mehreren verteilt angeordneten Temperatursensoren, ob entsprechende Sollbedingungen eingehalten sind. Dazu wird sichergestellt, dass von jedem für diese Überprüfung relevanten Temperatursensor eine aktuelle Messung vorliegt, z. B. eine Messung, die nicht älter ist als 30 Minuten. Liegt für einen Sensor eine solche Messung nicht vor, wird sie von der Cloudplattform via Gateway ausgelöst. Falls, z. B. aufgrund einer technischen Störung, kein Messergebnis generiert wird, erfolgt eine Fehlermeldung an eine für die Behebung von Störungen verantwortliche Person.

Die zeitliche Frequenz der Messungen kann fallweise verändert werden, insbesondere wenn ein erhöhtes Risiko für nicht eingehaltene Sollbedingungen besteht. So kann die Frequenz erhöht werden, wenn Hinweise auf die Rückkehr von Benutzern nach einer längeren Abwesenheit bestehen, z. B. aufgrund von Kalendereinträgen, Ortsdaten von Fahrzeugen o. ä.

Im dargestellten Ausführungsbeispiel werden z. B. folgende Sollbedingungen vorgegeben:

1) Die Kaltwassertemperatur übersteigt im gesamten Leitungssystem nirgends 25 °C.

2) Die Warmwassertemperatur beträgt am Ausgang jedes Boilers (zentraler Boiler oder Etagenboiler) mindestens 60 °C.

3) Die Warmwassertemperatur beträgt im Bereich jedes Entnahmepunktes mindestens 55 °C.

Bei der Nichteinhaltung der Bedingung 1) werden folgende Schritte ausgeführt:

1.1 Es wird anhand der Messwerte eines Temperatursensors im Bereich des Hausanschlusses 3 geprüft, ob das ins Leitungssystem 2 eingespeiste Wasser im üblichen Temperaturbereich (ca. 4-15 °C) liegt. Falls nicht, erfolgt eine Meldung an die verantwortliche Person. Falls ja, folgt der nächste Schritt.

1.2 Falls vorhanden wird in der Kaltwasserleitung eine Zirkulation durch entsprechende Betätigung des Zirkulationsventils 30 aktiviert. Das in der Zirkulation zurückkehrende Wasser kann der Warmwasseraufbereitung zugeführt oder abgelassen werden. Wenn keine dedizierte Zirkulation vorgesehen ist, kann Kaltwasserverbrauch z. B. durch die Fernauslösung von Toilettenspülungen o. ä. provoziert werden.

1.3 Falls Schritt 1.2 nicht zur Einhaltung der Sollbedingungen führt, werden die Nutzer im Gebäude informiert und gebeten, bei der nächsten Kaltwasserentnahme eine gewisse Zeit zuzuwarten, bis das Wasser für sensitive Nutzungen gebraucht wird (z. B. als Getränk bzw. zur Zubereitung von Kaltgetränken). Alternativ oder zusätzlich kann eine verantwortliche Person des Gebäudebetreibers informiert werden, da eine zu hohe Kaltwassertemperatur auf zu hohe Umgebungstemperaturen in einem Technikraum oder Schacht oder auf Probleme mit der Dämmung der Kaltwasserleitung hindeuten könnte, die abzuklären wären.

1.4 Falls aufgrund einer länger andauernden Überschreitung der Soll-Maximaltemperatur ernsthafte gesundheitliche Folgen drohen sollten, kann der Wasserbezug ganz oder an einzelnen Entnahmestellen unterbunden werden. Er wird wieder manuell freigegeben, wenn das Problem gelöst werden konnte und/oder wenn das System feststellt, dass die Sollbereiche wieder eingehalten werden.

Bei der Nichteinhaltung der Bedingung 2) wird insbesondere der betroffene Boiler hochgeregelt. Parallel erfolgt eine Mitteilung an die verantwortliche Person des Gebäudebetreibers mit der Aufforderung, das Gerät zu überprüfen. Gründe für eine nicht ausreichende Temperatur können beispielsweise eine Störung des Thermostats, Verkalkung oder andere Störungen des Boilers, verkalkte Zirkulationsventile oder eine ungenügende Leistung der Zirkulationspumpe sein.

Bei der Nichteinhaltung der Bedingung 3) wird zunächst geprüft, ob es sich um einen andauernden Zustand handelt oder ob die Temperatur aufgrund fehlenden Bezugs sukzessive gesunken ist.

Im ersten Fall kann ebenfalls der für die Versorgung des jeweiligen Entnahmepunktes zuständige Boiler hochgeregelt werden, insbesondere kann eine höhere Solltemperatur festgelegt werden. Ebenso kann eine Mitteilung an eine verantwortliche Person erfolgen.

Im zweiten Fall kann eine Zirkulationsleitung für Warmwasser aktiviert werden (falls vorhanden), wiederum mit Hilfe eines entsprechenden Zirkulationsventils 30. Ansonsten können auch hier die Nutzer im Gebäude informiert und gebeten werden, bei der nächsten Warmwasserentnahme eine gewisse Zeit zuzuwarten, bis das Wasser für sensitive Nutzungen gebraucht wird. Die Nutzer können erneut informiert werden, wenn die Sollbedingungen wieder eingehalten sind.

Die Benachrichtigung kann über die Cloudplattform und eine Applikation bzw. Webapplikation erfolgen, ggf. auch über eine Push-Nachricht an ein Mobilgerät des Benutzers bzw. der verantwortlichen Person. Es ist aber auch möglich, die lokal im Gebäude anwesenden Benutzer über lokale Einrichtungen zu informieren, z. B. Statusanzeigen an Armaturen oder Displays eines Gebäudeautomationssystems. Die Ansteuerung solcher Geräte kann von der Cloudplattform über externe Dienste erfolgen (insbesondere über dedizierte APIs) oder über eine der Gateways, entweder direkt an die Anzeigeeinrichtung oder über ein Gebäudeautomationssystem einer Drittpartei.

Die Benachrichtigung einer bestimmten Person kann von der Tageszeit und/oder dem Standort der Person abhängig gemacht werden. So können beispielsweise bestimmte Meldungen nur dann erfolgen, wenn zu erwarten ist, dass die Person im Gebäude anwesend ist. Falls der mitzuteilende Zustand fortdauern sollte, kann die Meldung nachgeholt werden, wenn die Person ins Gebäude zurückkehrt.

Anhand der Messdaten der Temperatursensoren können auch Hinweise auf Kalkablagerungen ermittelt werden. Liegen solche Hinweise vor, kann der Ionentauscher 40 nachgeregelt werden. Zudem wird die verantwortliche Person des Gebäudebetreibers informiert. Wie oben erwähnt, können solche Hinweise aus Temperaturwerten und Zeitreihen derselben gewonnen werden. Auch Druckmessungen können herangezogen werden, da Kalkablagerungen oft zu einem erhöhten Druckabfall führen. Zur Verarbeitung der Eingangsdaten kann ein Machine-Learning-Modell eingesetzt werden.

**Leckagedetektion**

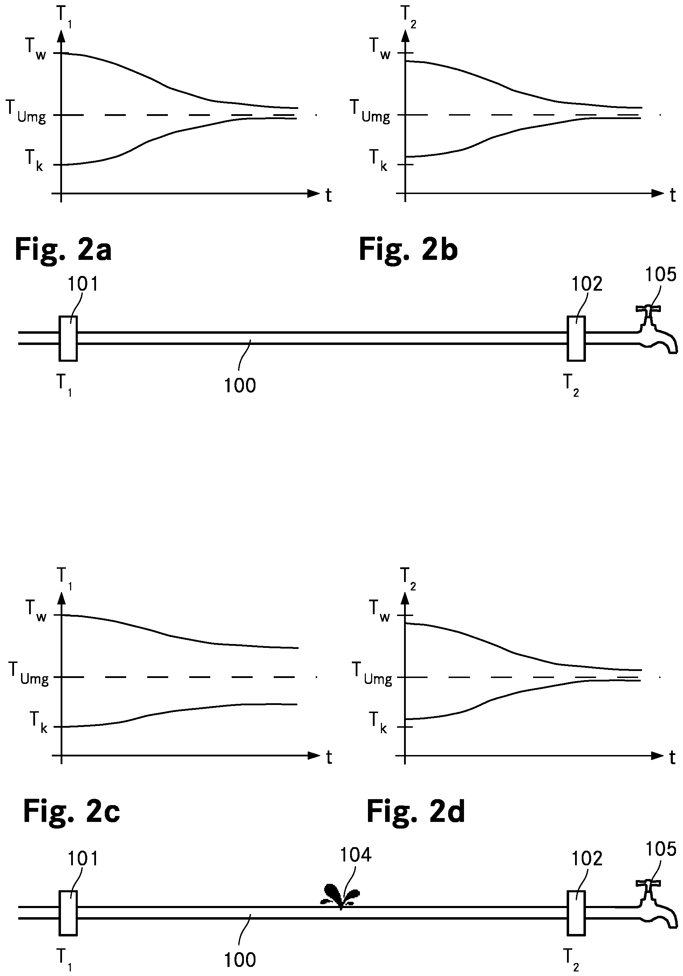

Mithilfe des erfindungsgemässen Systems lassen sich Lecks im Leitungssystem 2 erkennen und lokalisieren. Die Erkennung erfolgt mittels des Vergleichs der Temperaturmessungen beabstandeter Temperatursensoren im selben Leitungsabschnitt und/oder mittels einer Analyse des zeitlichen Verlaufs der Temperaturen. Die Figuren 2a-d zeigen Temperaturverläufe an Messstellen zweier beabstandeter Temperatursensoren beim Nichtvorhandensein und Vorhandensein eines dazwischenliegenden Lecks.

Die Figuren 2a und 2b stellen die Situation in einem Leitungsabschnitt 100 ohne Leck dar. Es wird davon ausgegangen, dass ein Ventil 105 an einer Entnahmestelle geschlossen ist und dass im betrachteten Abschnitt keine Verzweigungen vorhanden sind. Entsprechend liegt im betrachteten Zeitintervall kein Fluss im Leitungsabschnitt 100 statt. Im Leitungsabschnitt 101 sind nun beabstandet ein erster Temperatursensor 101 an einer ersten Messstelle und stromabwärts davon ein zweiter Temperatursensor 102 an einer zweiten Messstelle angeordnet.

Die Figur 2a zeigt den Verlauf der Messwerte der Kaltwassertemperatur $T_k$ und der Warmwassertemperatur $T_w$ beim ersten Temperatursensor 101 nach einem Wasserbezug, während einer längeren Periode ohne weiteren Bezug. Sowohl die Kaltwassertemperatur $T_k$ als auch die Warmwassertemperatur $T_w$ nähern sich sukzessive der Umgebungstemperatur $T_{Umg}$ an. In der Situation ohne Leck ergibt sich an der zweiten Messstelle ein ähnliches Bild. Die Kaltwassertemperatur $T_k$ und die Warmwassertemperatur $T_w$ beim zweiten Temperatursensor 102 nähern sich sukzessive der Umgebungstemperatur $T_{Umg}$ an, wobei lediglich die Ausgangstemperaturen bereits etwas näher an der Umgebungstemperatur $T_{Umg}$ liegen als an der ersten Messstelle, weil im dazwischenliegenden Leitungsabschnitt bereits eine gewisse Angleichung stattgefunden hat.

Die Figuren 2c, 2d betreffen nun die Situation mit einem Leck 104 im Leitungsabschnitt 100, zwischen der ersten Messstelle und der zweiten Messstelle. Die Figur 2c zeigt den Verlauf der Messwerte des ersten Temperatursensors 101. Wie gut erkennbar ist, ist aufgrund des Zuflusses von weiterem Kalt- bzw. Warmwasser zum Ausgleich des Verlusts durch das Leck die Annäherung der Kaltwassertemperatur $T_k$ und der Warmwassertemperatur $T_w$ an die Umgebungstemperatur $T_{Umg}$ verglichen mit der Situation ohne Leck verzögert. Die Figur 2d zeigt den Temperaturverlauf, wie er vom zweiten Temperatursensor 102 an der zweiten Messstelle aufgenommen wird. Er ist dem Temperaturverlauf am zweiten Temperatursensor 102 bei der Situation ohne Leck recht ähnlich. Es ist gut ersichtlich, dass aufgrund des Lecks ein deutlicher Unterschied zwischen den Verläufen feststellbar ist: Während die Temperatur an der ersten Messstelle stromaufwärts des Lecks stark durch den Nachfluss beeinflusst ist, ist dieser Einfluss an der zweiten Messstelle deutlich weniger ausgeprägt.

Durch einen Vergleich der Verläufe in der ersten Situation gemäss Figuren 2a, 2b und der Verläufe in der zweiten Situation gemäss Figuren 2c, 2d lässt sich somit ein Rückschluss auf ein Leck stromabwärts der ersten Messstelle treffen.

Dazu kann zum einen der Verlauf der Temperaturmessungen am ersten Temperatursensor 101 analysiert werden. Entspricht der Verlauf einer sukzessiven Annäherung an die Umgebungstemperatur $T_{Umg}$, liegt kein Hinweis auf ein Leck stromabwärts des ersten Temperatursensors 101 vor. Ist die Annäherung zeitlich verzögert und/oder im Ausmass reduziert, kann dies auf ein Leck stromabwärts des Temperatursensors 101 hindeuten. Die Verläufe gemäss Figur 2a, gemäss Figur 2c und während eines Entnahmevorgangs unterscheiden sich auch auf qualitativer Ebene deutlich, so dass eine Leckerkennung bereits aufgrund des Temperaturverlaufs an einem einzigen Sensor möglich ist.

Zum anderen können die Verläufe der Temperaturmessungen beider beabstandeter Temperatursensoren 101, 102 miteinander verglichen werden: Liegen sehr ähnliche Verläufe vor wie in den Fig. 2a, 2b, liegt kein Hinweis auf ein dazwischenliegendes Leck vor. Unterscheiden sich die Verläufe in der charakteristischen Weise wie in den Fig. 2c, 2d dargestellt, dürfte ein Leck zwischen den Temperatursensoren 101, 102 vorhanden sein.

Falls dieselbe Analyse bei mehreren Temperatursensoren entlang eines Leitungsstrangs gemacht wird, kann die Position des Lecks genauer bestimmt werden: Sie liegt stromabwärts des letzten Temperatursensors, der das anomale Verhalten zeigt und stromaufwärts des folgenden Temperatursensors, bei dem das anomale Verhalten nicht auftritt..

Der Vergleich kann mittels Machine-Learning-Methoden erfolgen. Sofern bekannt, kann die Umgebungstemperatur am jeweiligen Messort mitberücksichtigt werden.

Für die Detektion von Lecks ist eine relativ hohe Zeitauflösung der Temperaturmessungen von z. B. einer Minute von Vorteil. So können Phasen mit und ohne Wasserbezug klar unterschieden werden, und Phasen mit längerem Nichtbezug, in denen sich die Unterschiede zwischen der Situation ohne und derjenigen mit Leck klar abzeichnen, werden sicher erfasst. Es kann sinnvoll sein, die Leckerkennung nur während vorbestimmter Zeitperioden (z. B. nachts, wenn wenig Bezüge stattfinden) regelmässig durchzuführen bzw. auf explizite Veranlassung einer berechtigten Person.

Ergänzend können Daten von Druck- und/oder Durchflusssensoren ebenfalls zur Detektion von Lecks herangezogen werden.

Wird ein Leck festgestellt, erfolgt eine Alarmierung einer verantwortlichen Person des Gebäudebetreibers. In der Bauphase kann direkt der verantwortliche Installateur benachrichtigt werden. Alternativ oder zusätzlich kann - falls vorhanden - ein fernsteuerbares Absperrventil betätigt werden, um den weiteren Fluss von Wasser in den Abschnitt mit Leck zu verhindern.

## Messung des Energie- und Trinkwasserverbrauchs

Die Cloudplattform ist zudem in der Lage, anhand der Temperaturmessungen und weiterer Daten den thermischen Energieverbrauch, namentlich den Verbrauch für die Warmwasseraufbereitung als auch für Wärmeverluste im Leitungssystem zu berechnen. Der thermische Verbrauch für die Warmwasseraufbereitung lässt sich anhand der Messdaten eines ersten Temperatursensors am Eingang des entsprechenden Boilers, eines zweiten Temperatursensors am Ausgang des Boilers und eines Durchflusssensors am Ein- oder Ausgang bestimmen. Der thermische Verbrauch $E$ ergibt sich dann unmittelbar wie folgt:

$$E = Q \cdot \rho \cdot c \cdot \Delta T,$$

wobei Q den gemessenen Volumenstrom, $\rho$ die Dichte des Mediums, c die spezifische Wärmekapazität des Mediums und $\Delta T$ die Differenz zwischen der gemessenen Temperatur am ersten Sensor und am zweiten Sensor bezeichnen.

Analog dazu kann der Wärmeverlust entlang eines Leitungsabschnitts (ohne Abzweigung oder Entnahmestelle) bestimmt werden, wobei dann der erste Temperatursensor am Anfang des Leitungsabschnitts und der zweite Temperatursensor am Ende des Leitungsabschnitts angeordnet sind.

Die berechneten Werte können wie weiter unten näher beschrieben bei der Optimierung des Energieverbrauchs im gesamten Leitungssystem herangezogen werden.

## Anwesenheitsdetektion

Die Cloudplattform kann anhand der Temperatur-Messwerte feststellen, ob in einem Gebäude oder einer Gebäudeeinheit Personen anwesend sind. Wie aus den Fig. 2a, 2c ersichtlich ist, nähert sich bei fehlendem Kalt- bzw. Warmwasserbezug die Temperatur des in den entsprechenden Leitungen befindlichen Mediums sukzessive der Umgebungstemperatur an. Anhand der Zeitreihe der Temperaturmessungen oder auch nur anhand eines Momentanvergleichs zwischen der Medientemperatur, der Temperatur des am Hausanschluss verfügbaren Wassers und gegebenenfalls der Umgebungstemperatur kann somit festgestellt werden, ob Bezüge stattfinden oder nicht. Finden während einer gewissen Zeitdauer keine Bezüge bei lokal betätigbaren Entnahmestellen (Wasserhähne, Toilettenspülungen) statt, deutet dies auf die Abwesenheit der Benutzer bzw. Bewohner hin, während lokale Bezüge an solchen Entnahmestellen ein klares Indiz für die Anwesenheit sind.

Die An- oder Abwesenheit der Nutzer kann wie erwähnt bei der Auslösung von Mitteilungen berücksichtigt werden. Sie ist auch für gewisse Steueraktionen relevant. So kann z. B. Energie eingespart werden, wenn Warmwasser nur dann aufbereitet wird, wenn die Benutzer anwesend sind. Die Anwesenheitsbestimmung anhand der Temperaturmesswerte kann durch die Berücksichtigung externer Daten unterstützt oder ersetzt werden. So können z. B. Kalenderdaten oder Positionsdaten von Fahrzeugen, die über Programmierschnittstellen erhältlich sind, für die Anwesenheitsbestimmung herangezogen werden. Solche Daten ermöglichen sogar eine Vorhersage einer zukünftigen An- oder Abwesenheit und damit frühzeitige, proaktive Massnahmen zur Steigerung des Komforts, zur Verbesserung der Trinkwasserhygiene oder zur Reduktion des Energieverbrauchs.

Weitere Daten, die für die Bestimmung der Anwesenheit von Nutzern herangezogen werden können, sind Messdaten von $CO_2$-Sensoren oder Innenraum-Geräuschpegelsensoren, Daten von Alarmanlagen oder Daten aus Gebäudeautomationssystemen (z. B. in Bezug auf die Betätigung von elektrischen Beschattungs- oder Beleuchtungseinrichtungen).

Über Gebäudeautomatisierungssysteme, externe Clouds oder Dienstleisterplattformen lassen sich weitere Einrichtungen in Abhängigkeit der aktuellen oder prognostizierten An- bzw. Abwesenheit steuern, z. B. HLK-Anlagen (z. B. Ventile von Fussbodenheizungen), Beschattungsanlagen, Beleuchtungseinrichtungen oder Ladesysteme, z. B. für elektrische Autos.

Das erfindungsgemässe System ermöglicht unter anderem eine verbesserte Steuerung von Wärmepumpenboilern, die zur Warmwasserbereitung auf der Etage eingesetzt werden und in der Regel letztlich Wohn- oder Betriebsräumen Wärme entziehen. Ist zu einem bestimmten Zeitpunkt bzw. auf einen bestimmten Zeitpunkt hin eine Abkühlung erwünscht, kann der Wärmepumpenboiler entsprechend zeitlich betätigt werden. Hinsichtlich des Raumkomforts kann es insbesondere im Frühjahr oder im Herbst vorteilhaft sein, wenn eine Fussbodenheizung koordiniert mit dem Wärmepumpenboiler aktiviert wird, so dass der Boden etwas aufgewärmt wird und nicht allzu kalt wirkt, während die Raumtemperatur beim gewünschten Sollwert bleibt.

**Predictive maintenance**

Die an die Cloudplattform übermittelten Mess- und Zustandsdaten ermöglichen den rechtzeitigen Unterhalt (predictive maintenance) von Sanitärgeräten, bevor Störungen auftreten. Wenn z. B. der Füllstand des Ionentauschers 40 einen gewissen Sollwert unterschreitet, kann über die Cloudplattform eine Warnung ausgegeben oder eine Nachfüllung des Enthärtersalzes beauftragt werden. Analog dazu können Zustandsdaten der Etagenboiler 21, 22 dazu dienen, Austauschbedarf für die Opferanode oder eine zu beseitigende Verkalkung zu erkennen und die notwendigen Massnahmen auszulösen.

**Selbstlernendes System zur Reduktion des Energie- und Trinkwasserverbrauchs**

Gestützt auf die aus dem Gebäude empfangenen Daten sowie auf weitere Daten aus Drittquellen ist die Cloudplattform in der Lage, Steuerdaten zu erzeugen, die zu einer Reduktion des Energie- und/oder Trinkwasserverbrauchs im Gebäude beitragen. Dazu analysiert die Cloudplattform anhand der vorhandenen historischen Daten, verknüpft mit entsprechenden Energie- bzw. Wasserverbrauchsdaten, den bisherigen Energieverbrauch und identifiziert Möglichkeiten zur Verbrauchsreduktion. Werden Szenarien identifiziert, die einen reduzierten Energie- bzw. Wasserverbrauch bedeuten und gleichzeitig vorgegebene Rahmenbedingungen, z. B. in Bezug auf den Komfort der Bewohner des Gebäudes, einhalten, werden gestützt darauf Steuerdaten erzeugt und im Rahmen des erfindungsgemässen Systems und/oder über Drittdienste umgesetzt. Neben den unmittelbar im Rahmen des Systems gesteuerten Komponenten wie z. B. den Etagenboilern, Ionentauschern oder Zirkulationsventilen lassen sich weitere haustechnische Einrichtungen wie z. B. weitere Ventile (wie Absperr- oder Entleerventile), eine HLK-Anlage, Beschattungseinrichtungen, Ladeeinrichtungen für Batterien, Beleuchtungseinrichtungen usw. mittels eines angebundenen Gebäudeautomationssystems oder über Programmierschnittstellen steuern.

Die Optimierung basiert auf einem selbstlernenden Modell, das anhand der erfassten Daten, inklusiv zugeordneter Verbrauchsdaten, laufend trainiert und aktualisiert wird. Dazu werden an sich bekannte Machine-Learning-Prozesse eingesetzt. Angesichts der Komplexität und Menge der zu verarbeitenden Daten eignet sich besonders ein tiefes künstliches neuronales Netz (deep neural network, DNN). Zu dessen Training werden insbesondere Zeitreihen der folgenden Eingangsdaten herangezogen:

- Temperaturmesswerte des Leitungssystems;

- Druck- und Durchflussmesswerte des Leitungssystems;

- Innentemperaturen;

- Aussentemperaturen;

- Produktionsdaten einer PV-Anlage oder anderer lokaler Anlagen zur Stromerzeugung;

- Anwesenheitsdaten (abgeleitet aus Temperaturdaten und/oder aus externen Quellen);

- Wetterdaten;

- Angaben zum Zeitraum (Tageszeit, Jahreszeit).

Als Zieldaten dienen zeitlich zugeordnete Verbrauchswerte für Energie und Trinkwasser. Weil die Werte nicht notwendigerweise gleichzeitig erfasst werden, erfolgt zunächst eine Interpolation für vorgegebene Zeitpunkte.

Die Gewichte im DNN werden periodisch aktualisiert. So wird auch automatisch Anpassungen im System, z. B. der Ersatz oder der Hinzufügung von Komponenten, Rechnung getragen.

Das DNN bildet ein Modell, das die Beziehung zwischen den erwähnten Eingangsdaten und dem Energie- und/oder Wasserverbrauch beschreibt. Mit Hilfe dieses Modells können dann verschiedene mögliche Szenarien verglichen und dasjenige mit dem niedrigsten Energie- bzw. Wasserverbrauch identifiziert werden. Dieser Vergleich erfolgt automatisch, in einem Optimierungsverfahren. Dabei werden Parameter (z. B. Zeiträume für die Aktivierung der Boiler, der Zirkulationsventile oder einer HLK-Anlage oder Solltemperaturen) unter der Einhaltung von Sollparametern (z. B. Wassertemperaturen, Raumtemperaturen, Ladezustände von Batterien usw.) so variiert, bis ein Minimum für den Strom- und/oder den Energiebedarf gefunden wird.

In Bezug auf die Warmwassererzeugung können z. B. Betriebsparameter gemäss folgenden Überlegungen eingestellt werden:

- Bei geringem erwarteten Verbrauch kann die gespeicherte Wärmemenge durch Absenken der Solltemperatur temporär reduziert werden.

- Die Warmwasseraufbereitung kann so gesteuert werden, dass in der Zirkulationsleitung eine Temperatur von 55°C exakt eingehalten wird und diesen Wert nicht übersteigt. Dazu kann die Zirkulationspumpe gezielt angesteuert werden.

- Im Winter ist die Kaltwassertemperatur tiefer als im Sommer. Warmes Bezugswasser ist in der Regel eine Mischung von Kalt- und Warmwasser. Falls die Kaltwassertemperatur tief ist, muss mehr Warmwasser beigemischt werden (und umgekehrt). Somit kann der Energiebedarf z. B. im Sommer, bei höheren Kaltwassertemperaturen, gesenkt werden, indem die in den Speichern bereitgestellte Wärmemenge reduziert wird. Dies erfolgt wiederum z. B. durch Reduktion der Solltemperatur, es sind aber auch Wärmespeicher mit variablem Inhalt denkbar, z. B. solche, in denen einzelne Speichermodule je nach Bedarf zugeschaltet und befüllt oder abgesperrt und entleert werden können.

Die Optimierung kann mithilfe von Brute-Force-Verfahren erfolgen, bei denen eine gewisse Zahl an Parameterkombinationen durchgerechnet und die Kombination mit dem besten Ergebnis ausgewählt wird oder mit numerischen Optimierungsverfahren, bei denen die Parameter im Rahmen einer iterativen Verbesserung schrittweise variiert werden.

Nebst dem Energie- und Trinkwasserverbrauch oder als Alternative können auch die Energie- bzw. Trinkwasserkosten als Kriterium für die Optimierung herangezogen werden. Dies ist dann relevant, wenn eine bestimmte Menge bezogener Energie (z. B. Elektrizität) oder Trinkwasser keinen konstanten Preis hat, z. B. aufgrund von unterschiedlichen Tag- und Nachttarifen, der unterschiedlichen Verfügbarkeit von lokal erzeugter Energie oder der Verfügbarkeit von lokalem Quellwasser, das nur einen beschränkten Volumenstrom bereitstellen kann.

Für einige Anwendungen, z. B. die Leckagedetektion wie oben beschrieben, ist es notwendig, dass in der Cloudplattform die Topologie des Leitungssystems und die Positionierung der Temperatursensoren bekannt sind. Auch zum Zweck der Information von Nutzern oder Gebäudedienstleistern ist es hilfreich, wenn Positionsdaten verfügbar sind.

Die Topologie und Positionierung können manuell erfasst und bei Änderungen nachgeführt werden. Es ist jedoch von Vorteil, wenn die Erfassung oder Nachführung teilweise oder ganz automatisiert erfolgen kann. Dies reduziert den Unterhaltsaufwand für das System und vermeidet Fehler aufgrund von unterlassenen oder verzögerten Aktualisierungen.

Entsprechend umfasst das erfindungsgemässe System ein Modul zur automatischen Lokalisierung oder Zuordnung neu hinzugefügter Komponenten. In Bezug auf Temperatursensoren werden dazu (falls verfügbar) folgende Informationen berücksichtigt:

- Zuordnung des neu hinzugefügten Temperatursensors zu einer Gateway;

- Signalstärken und ggf. -laufzeiten von drahtlosen oder drahtgebundenen Signalen, die zwischen dem Sensor und weiteren Komponenten übertragen werden;

- Zeitreihen von Temperaturmessungen mit dem neuen Sensor und mit bereits vorhandenen Sensoren;

- Zeitreihen von weiteren Daten (z. B. Messwerte von Druck- oder Durchflusssensoren, externe Informationen);

- vorhandene Informationen zum Leitungssystem (Topologie und Positionierung von Komponenten), z. B. manuell erfasste, bereits früher automatisch bestimmte oder aus einem BIM.

Die Informationen werden ausgewertet und es wird eine Zuordnung bzw. Lokalisierung versucht. Dazu kann ein Machine-Learning-Modell eingesetzt werden, das z. B. zunächst auf Basis der Messdaten mehrerer Temperatursensoren die Durchflussgeschwindigkeiten in den relevanten Leitungen abschätzt oder direkt auf Basis der (gleichzeitig erhobenen) Messdaten mehrerer Temperatursensoren direkt die Position des neuen Temperatursensors bestimmt. Die Machine-Learning-Modelle können z. B. auf einem künstlichen neuronalen Netz basieren. Dieses kann mit historischen Daten zu Temperaturen bzw. Durchflussgeschwindigkeiten sowie Zuordnungen bzw. Positionen von Temperatursensoren trainiert werden.

Alternativ oder ergänzend können dynamische Informationen ausgewertet werden, z. B. ein zeitlicher Versatz von Messwerten, der durch die unterschiedliche Positionierung bedingt ist. Um solche Informationen gewinnen zu können, kann während der Bestimmung oder Aktualisierung der Topologie bzw. der Positionsdaten die Messfrequenz der Temperatursensoren temporär stark erhöht werden, z. B. auf eine Messung pro Sekunde oder mehr.

Entspricht das Ergebnis in Bezug auf die Konfidenz oder die Genauigkeit nicht Vorgaben für den jeweiligen Komponententyp oder kann keine Zuordnung bzw. Lokalisierung vorgenommen werden, wird der zuständige Installateur informiert und gebeten, die Zuordnung bzw. Lokalisierung oder dazu benötigte Informationen manuell zur Verfügung zu stellen.

Die Erfindung ist nicht auf das dargestellte Ausführungsbeispiel beschränkt. Insbesondere können individuelle Elemente des Systems anders ausgestaltet sein. Die Struktur des Systems kann unterschiedlich sein. Insbesondere kann die Netzstruktur innerhalb des Gebäudes weitere Ebenen umfassen.

Zusammenfassend ist festzustellen, dass die Erfindung ein System zur Trinkwasserversorgung schafft, welches engmaschig überwacht werden kann und Daten zur Verfügung stellt, um verschiedene Zustände und Vorgänge des Systems zu identifizieren.

**Patentansprüche**

**1.** System zur Trinkwasserversorgung eines Gebäudes, umfassend

a) ein Leitungssystem zur Versorgung des Gebäudes mit Trinkwasser;
b) mehrere verteilt angeordnete Temperatursensoren zum Erzeugen von Messdaten, die einer Wassertemperatur an einem Messort entlang einer Leitung des Leitungssystems entsprechen,
c) ein lokales Netzwerk, mit dem die Temperatursensoren zur Übermittlung von Daten verbunden sind;
d) eine Cloudplattform, die über ein übergeordnetes Kommunikationsnetz mit dem lokalen Netzwerk verbunden ist;

wobei zeitlich aufgelöste Messdaten der Temperatursensoren über das lokale Netzwerk und das übergeordnete Kommunikationsnetz zur Cloudplattform übermittelbar sind.

**2.** System nach Anspruch 1, **dadurch gekennzeichnet, dass** das lokale Netzwerk folgendes umfasst:

a) mehrere verteilt angeordnete Gateways, wobei jeder der Temperatursensoren mit mindestens einer der Gateways zur Übermittlung von Daten verbunden ist; und
b) einen Router, der mit einem übergeordneten Kommunikationsnetz und mit den Gateways zur Übermittlung von Daten verbunden ist.

**3.** System nach Anspruch 2, **dadurch gekennzeichnet, dass** mindestens eine der Gateways eine Schnittstelle für eine direkte Übermittlung von Daten mit einem lokalen Endgerät bereitstellt, und Messdaten und Steuerdaten über die Gateway zwischen dem lokalen Endgerät und einem mit der Gateway verbundenen Temperatursensor und/oder einem mit der Gateway verbundenen Sanitärgerät übermittelbar sind.

**4.** System nach Anspruch 2 oder 3, **dadurch gekennzeichnet, dass** in der Cloudplattform in Abhängigkeit der Messdaten Steuerdaten erzeugbar und über das übergeordnete Kommunikationsnetz und das lokale Netzwerk zu einem mit der Gateway verbundenen Sanitärgerät übermittelbar sind, wobei das System insbesondere mindestens eine der folgenden Vorrichtungen als Sanitärgerät umfasst:

a) einen Etagenboiler;
b) ein fernsteuerbares Zirkulationsventil.

**5.** System nach einem der Ansprüche 1 bis 4, **dadurch gekennzeichnet, dass** das Leitungssystem erste Leitungen zur Verteilung von Kaltwasser und zweite Leitungen zur Verteilung von Warmwasser umfasst, wobei die Temperatursensoren erste Temperatursensoren zur Bestimmung einer Kaltwassertemperatur und zweite Temperatursensoren zur Bestimmung einer Warmwassertemperatur umfassen.

**6.** System nach einem der Ansprüche 1 bis 5, **dadurch gekennzeichnet, dass** die Cloudplattform zum Empfang weiterer Daten von externen Quellen eingerichtet ist, wobei die weiteren Daten mindestens eine der folgenden umfassen:

a) Wetterdaten;
b) Daten eines im Gebäude angeordneten CO2-Sensors;
c) Daten eines im Gebäude angeordneten Geräuschpegelsensors;
d) Daten einer Alarmanlage des Gebäudes;
e) Kalenderdaten eines Bewohners des Gebäudes;
f) Daten eines Automationssystems des Gebäudes.

7. System nach einem der Ansprüche 1 bis 6, **dadurch gekennzeichnet, dass** die Cloudplattform dazu eingerichtet ist, anhand der Messdaten der mehreren verteilt angeordneten Temperatursensoren zu überprüfen, ob die entsprechenden Wassertemperaturen vorgegebenen Sollbereichen entsprechen.

8. System nach Anspruch 7, **dadurch gekennzeichnet, dass** mindestens einige der mehreren verteilt angeordneten Temperatursensoren entlang einer Leitung zur Verteilung von Warmwasser angeordnet sind und dass die Cloudplattform dazu eingerichtet ist, anhand dieser mindestens einigen Temperatursensoren an einem ersten Messort zu überprüfen, ob eine entsprechende erste Wassertemperatur in einem ersten Sollbereich liegt und an einem zweiten Messort zu überprüfen, ob eine entsprechende zweite Wassertemperatur in einem zweiten Sollbereich liegt, der sich vom ersten Sollbereich unterscheidet.

9. System nach Anspruch 7 oder 8, **dadurch gekennzeichnet, dass** die Cloudplattform eingerichtet ist, eine Mitteilung an einen Nutzer auszulösen, wenn

a) eine Wassertemperatur an einem Messort nicht in einem entsprechenden Sollbereich liegt;
b) eine Wassertemperatur sich an einem Messort aus einem entsprechenden Sollbereich hinausbewegt; und/oder
c) eine Wassertemperatur sich an einem Messort in einen entsprechenden Sollbereich hinein bewegt.

10. System nach einem der Ansprüche 1 bis 9, **dadurch gekennzeichnet, dass** die Cloudplattform dazu eingerichtet ist, anhand der Messdaten der mehreren verteilt angeordneten Temperatursensoren Hinweise auf Kalkablagerungen zu ermitteln und dass insbesondere anhand dieser Hinweise Steuerdaten für eine Entkalkungsvorrichtung zu erzeugen oder zu beeinflussen.

11. System nach einem der Ansprüche 1 bis 10, **dadurch gekennzeichnet, dass** die Cloudplattform dazu eingerichtet ist, anhand der Messdaten mindestens einiger der mehreren verteilt angeordneten Temperatursensoren Hinweise auf ein Vorhandensein und eine Lokalität eines Lecks im Leitungssystem zu ermitteln.

12. System nach Anspruch 11, **dadurch gekennzeichnet, dass** die Hinweise anhand eines zeitlichen Verlaufs der Messdaten ermittelt werden, wobei insbesondere zeitliche Verläufe mindestens zweier beabstandet entlang einer Leitung angeordneter Temperatursensoren verglichen werden.

13. System nach einem der Ansprüche 1 bis 12, **dadurch gekennzeichnet, dass** die Cloudplattform dazu eingerichtet ist, einen thermischen Energieverbrauch anhand der Messdaten mindestens eines der mehreren verteilt angeordneten Temperatursensoren und eines zugeordneten Durchflusssensors zu bestimmen.

14. System nach einem der Ansprüche 1 bis 13, **dadurch gekennzeichnet, dass** die Cloudplattform dazu eingerichtet ist, anhand der Messdaten mindestens einiger der mehreren verteilt angeordneten Temperatursensoren eine Anwesenheit oder Abwesenheit von Benutzern abzuleiten.

15. System nach Anspruch 14, **dadurch gekennzeichnet, dass** die Cloudplattform dazu eingerichtet ist, anhand der abgeleiteten Anwesenheit oder Abwesenheit Steuerdaten für eine haustechnische Anlage, insbesondere eine Warmwasseraufbereitungsanlage oder eine HLK-Anlage, zu erzeugen oder zu beeinflussen.

16. System nach einem der Ansprüche 1 bis 15, **dadurch gekennzeichnet, dass** die Cloudplattform dazu eingerichtet ist, anhand der Messdaten mittels eines selbstlernenden Systems Steuerdaten für eine haustechnische Anlage, insbesondere eine Warmwasseraufbereitungsanlage oder eine HLK-Anlage, zu erzeugen oder zu beeinflussen, wobei das selbstlernende System anhand der Messdaten und von Energie- und/oder Wasserverbrauchsdaten regelmässig aktualisiert wird.

17. System nach Anspruch 16, **dadurch gekennzeichnet, dass** die Steuerdaten weiter anhand von Daten zu verfügbarer lokal erzeugter elektrischer Energie und/oder Wetterdaten in Echtzeit beeinflussbar sind.

18. System nach einem der Ansprüche 1 bis 17, **dadurch gekennzeichnet, dass** mindestens einer der mehreren verteilt angeordneten Temperatursensoren eine an einer Aussenseite eines Rohrs der Leitung des Leitungssystems angeordnete Sensoreinheit umfasst und dass anhand von Messsignalen der Sensoreinheit eine Temperatur des an der Messstelle im Rohr geführten Trinkwassers errechnet wird, insbesondere mittels eines Supervised-Machine-Learning-Modells.

19. System nach einem der Ansprüche 1 bis 18, **dadurch gekennzeichnet, dass** die Cloudplattform dazu eingerichtet ist, eine Zuordnung mindestens eines der mehreren verteilt angeordneten Temperatursensoren zu einer Leitung des Leitungssystems und/oder eine Lokalisierung des mindestens einen Temperatursensors entlang dieser Leitung anhand der Messdaten automatisch zu bestimmen.

20. System nach Anspruch 19, **dadurch gekennzeichnet, dass** die automatische Bestimmung gestützt auf ein Machine-Learning-Modell erfolgt, das Durchflussgeschwindigkeiten in den Leitungen des Leitungssystems anhand der Messdaten abschätzt.

21. Verfahren zur Überwachung eines Leitungssystems zur Trinkwasserversorgung eines Gebäudes, umfassend folgende Schritte:

a) Durchführen von Temperaturmessungen mit mehreren verteilt angeordneten Temperatursensoren zum Erzeugen von zeitlich aufgelösten Messdaten, die einer Wassertemperatur an einem Messort entlang einer Leitung des Leitungssystems entsprechen;
b) Übermitteln der zeitlich aufgelösten Messdaten der Temperatursensoren über ein lokales Netzwerk und ein übergeordnetes Kommunikationsnetz zu einer Cloudplattform.

22. Computerprogramm, umfassend Befehle, die bei der Ausführung des Computerprogramms durch einen Prozessor diesen veranlassen, das Verfahren nach Anspruch 21 auszuführen.

Fig. 1

**Fig. 2a**

**Fig. 2b**

**Fig. 2c**

**Fig. 2d**

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 722 760 A1 (HOMESERVE PLC [GB]) 14. Oktober 2020 (2020-10-14) | 1-4,6-9, 14,18, 19,21,22 | INV. E03B7/04 E03B7/07 |
| A | * Seite 2, Absatz 4 - Seite 4, Absatz 27 * * Seite 5, Absatz 31 - Seite 12, Absatz 94; Ansprüche; Abbildungen 1-5 * | 5,15-17, 20 | G06Q50/06 G06N3/00 G01K3/00 G01N33/18 |
| | ----- | | |
| X | WO 2019/072807 A1 (VIEGA TECH GMBH & CO KG [DE]) 18. April 2019 (2019-04-18) | 1-5, 7-14,18, 19,21,22 | |
| A | * das ganze Dokument * | 6 | |
| | ----- | | |
| X | US 2018/230681 A1 (POOJARY SANJAY [US] ET AL) 16. August 2018 (2018-08-16) | 1-3,7,8, 11,14, 18,19,21 | |
| | * Seite 1, Absatz 2 * * Seite 1, Absatz 7 - Seite 4, Absatz 33 * * Seite 4, Absatz 85 - Seite 10, Absatz 132; Ansprüche; Abbildungen * | | |
| | ----- | | |

**RECHERCHIERTE SACHGEBIETE (IPC)**

E03B
G06Q
G06N
G01W
G01K

Der vorliegende Recherchenbericht wurde für alle Patentansprüche erstellt

| Recherchenort | Abschlußdatum der Recherche | Prüfer |
|---|---|---|
| München | 17. März 2025 | Fajarnés Jessen, A |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 20 6698

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2025

| Im Recherchenbericht angeführtes Patentdokument | Datum der Veröffentlichung | Mitglied(er) der Patentfamilie | Datum der Veröffentlichung |
|---|---|---|---|
| EP 3722760 A1 | 14-10-2020 | EP 3722760 A1 | 14-10-2020 |
| | | GB 2582938 A | 14-10-2020 |
| | | US 2020325660 A1 | 15-10-2020 |
| WO 2019072807 A1 | 18-04-2019 | AU 2018348392 A1 | 21-05-2020 |
| | | AU 2018348394 A1 | 21-05-2020 |
| | | AU 2018348396 A1 | 21-05-2020 |
| | | AU 2018348679 A1 | 21-05-2020 |
| | | CN 111201353 A | 26-05-2020 |
| | | CN 111201354 A | 26-05-2020 |
| | | CN 111201355 A | 26-05-2020 |
| | | CN 111212950 A | 29-05-2020 |
| | | DK 3695058 T3 | 28-03-2022 |
| | | EP 3695057 A1 | 19-08-2020 |
| | | EP 3695058 A1 | 19-08-2020 |
| | | EP 3695059 A2 | 19-08-2020 |
| | | EP 3695060 A1 | 19-08-2020 |
| | | PL 3695060 T3 | 19-08-2024 |
| | | US 2020283998 A1 | 10-09-2020 |
| | | US 2020283999 A1 | 10-09-2020 |
| | | US 2020284006 A1 | 10-09-2020 |
| | | US 2020362544 A1 | 19-11-2020 |
| | | WO 2019072805 A1 | 18-04-2019 |
| | | WO 2019072807 A1 | 18-04-2019 |
| | | WO 2019072809 A2 | 18-04-2019 |
| | | WO 2019072810 A1 | 18-04-2019 |
| US 2018230681 A1 | 16-08-2018 | KEINE | |

Für nähere Einzelheiten zu diesem Anhang : siehe Amtsblatt des Europäischen Patentamts, Nr.12/82

EPO FORM P0461